# EUROPEAN PATENT SPECIFICATION

(11) **EP 2 685 578 B1**
(45) Date of publication and mention of the grant of the patent: **24.10.2018**
(21) Application number: 12744917.1
(22) Date of filing: 06.02.2012
(51) Int. Cl.: H02G 9/04, E03F 5/04, E01B 26/00, E01B 2/00

(54) **PIT COVER, CONSTRUCTION STRUCTURE OF PIT COVER, MANUFACTURING METHOD, CONSTRUCTION METHOD, AND METHOD FOR ADJUSTING BUOYANCY**
GRUBENDECKEL, KONSTRUKTIONSSTRUKTUR FÜR EINEN GRUBENDECKEL, HERSTELLUNGSVERFAHREN DAFÜR, KONSTRUKTIONSVERFAHREN DAFÜR UND VERFAHREN ZUR EINSTELLUNG EINES AUFTRIEBS
COUVERCLE DE FOSSE, STRUCTURE DE CONSTRUCTION DE COUVERCLE DE FOSSE, PROCÉDÉ DE FABRICATION, PROCÉDÉ DE CONSTRUCTION ET PROCÉDÉ DE RÉGLAGE DE POUSSÉE

(30) Priority: 07.02.2011 JP 2011024397
(43) Date of publication of application: 15.01.2014
(73) Proprietor: Furukawa Electric Co., Ltd., Chiyoda-ku Tokyo 100-8322 (JP)
(72) Inventor: ANDO, Kazuya, Tokyo 100-8322 (JP); IIDA, Hidekuni, Tokyo 100-8322 (JP); SHIRAYAMA, Yuichi, Tokyo 100-8322 (JP); HABU, Koji, Tokyo 100-8322 (JP)
(74) Representative: Strehl Schübel-Hopf & Partner
(86) International application number: PCT/JP2012/052607
(87) International publication number: WO 2012/108380

(56) References cited:
- JP-A- H09 312 922
- JP-A- 2000 144 876
- JP-A- 2000 144 876
- JP-A- 2001 003 439
- JP-A- 2004 156 263
- JP-A- 2004 156 263
- JP-A- 2004 250 989
- JP-U- H 037 971
- JP-U- 3 007 971
- JP-U- 53 138 199
- JP-U- 53 138 199

## Description

### TECHNICAL FIELD

The present invention relates to cover material that achieves both strength and flying off prevention, and particularly to a pit cover used on a pit provided on the side of tracks such as high speed rail road tracks, and to a laying structure of the pit cover, a manufacturing method, a laying method, and a method for adjusting buoyancy.

### BACKGROUND ART

Conventionally, pits have been formed on the side of tracks, such as railroad tracks, for laying signal cables and the like. Normally, a concrete cover is placed over the pit. However, a concrete pit cover has poor workability because work is required within restricted times such as at night due to its weight. Therefore, a lighter pit cover is required.

Meanwhile, the top of the pit cover is a travel area used by workers when performing inspections or carrying parts. Accordingly, the pit cover must also have a high degree of strength. In other words, the pit cover is required to achieve both a lightweight and a high strength.

An example of a lightweight pit cover is a wooden one-step operation side-ditch cover (Patent Document 1) in which a plurality of wooden rectangular-solid-shaped cover members is arranged in parallel to form a square panel, while slit spaces for water passage are provided in the respective cover members, and a connecting means that allows parallel arrangement in a single unit is provided.

Further, there is a lid for side trench (Patent Document 2) provided with a large number of hollow rib parts arranged between a top plate and a bottom panel of a box-shaped cover formed of synthetic resin that communicate to the overall cover, hollow parts for filling with weight adjustment material to be filled with weight adjusting material are formed on the cover in the hollow rib parts, and vent holes penetrating between the top plate and the bottom plate through a one-piece junction panel.

Moreover, there is a lid with the internal excessive-high pressure release valve (Patent Document 3). The lid has an annular step and a circular opening formed at the central side of the annular step. The internal excessive-high pressure release valve comprises a lower annular valve member with an opening, an upper disc-shaped valve member, and a rod-shaped member for connecting the lower annular valve member and the upper disc-shaped valve member.

In addition, there is a pit cover made of synthetic resin mounted on a stepped portion of both edges of an upper opening of a pit and that forms an air flow path portion on the stepped mounted portion that communicates with the outside from the inner part of the pit (Patent Document 4).

### PRIOR ART DOCUMENTS

### Patent Documents

Patent Document 1: Japanese Unexamined Patent Application Publication No. 2005-030199
Patent Document 2: Japanese Unexamined Patent Application Publication No. H09-312922
Patent Document 3: Japanese Unexamined Patent Application Publication No. 2008-285845
Patent Document 4: Publication of Japanese Examined Utility Model Registration No. 3007971

JP-H09-312 922 A discloses a pit cover with the features in the precharacterising portions of the independent claims. JP-U-300 971 and JP-U-53-138 199 disclose pit covers with rib structures on their reverse surfaces for strengthening the pit cover and guiding air flows beneath it.

### SUMMARY OF THE INVENTION

### Technical Problem

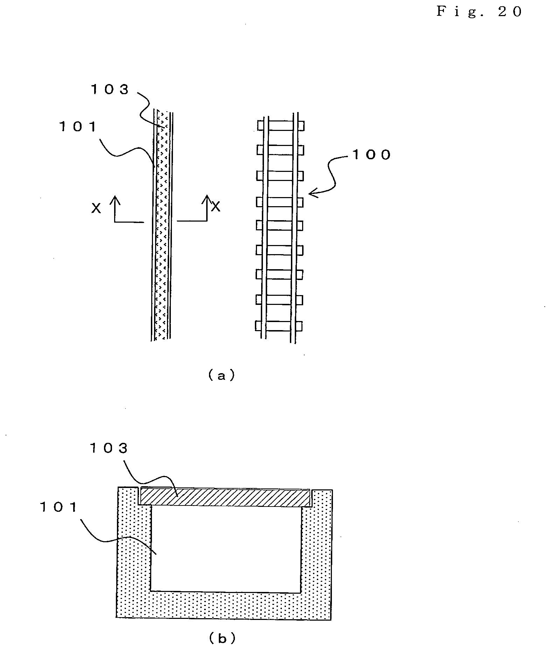

Meanwhile, when a train passes by, wind pressure and the like acts on the cover of the pit provided on the side of tracks such as railroad tracks. FIG. 20 is a drawing illustrating a pit 101 laid to the side of tracks 100 and a pit cover 103 provided on a pit. FIG. 20A is a plan view, and FIG. 20B is a cross-sectional view of the line X-X of FIG. 20A. A train travels on the tracks 100. When the train travels on the tracks 100, a pressure change occurs in the vicinity of the pit 101 on the side of tracks due to the wind pressure that accompanies the travel of the train.

Specifically, when referencing a certain site, initially, the pit cover 103 is placed on the pit 101 with only its own weight due to gravity acting on the pit cover 103. While in this state, in a stage where a train approaches the site, a positive pressure (a force pressing the cover downward) gradually increases on the pit cover 103, and the pit cover 103 is pressed in the direction of the pit 101. Afterwards, in a stage where the train has passed by the site, the pressure suddenly turns to a negative pressure (a force lifting the cover upward) where the pressure inside the pit 101 is greater. Thereafter, after the train has completely passed by, the negative pressure is suddenly gone and the force acting to lift the cover upward due to the pressure difference above and below the pit cover disappears, and the force acting on the pit cover 103 becomes only gravity.

This type of pressure change in conjunction with the passing of a train depends on the speed of the train, and the faster the speed of the train, the greater the buoyancy and the like acting on the pit 101 laid next to the tracks 100 and on the pit cover 103. However, as described above, a lightweight pit cover 103 that takes into account workability may be unable to withstand the buoyancy at the time of the passing of the train, causing the pit cover 103 to fly off, at which time, the pit cover may hit the train while traveling or be flied off along the track, leading to a serious accident.

Conversely, with a method such as that given in Patent Document 1, a simple wooden cover has a structure which allows connection so that the length can be adjusted, and merely slit spaces for water passage are formed as corrosion prevention for the wooden cover and cannot withstand the buoyancy described above. In particular, there is a problem in that there is a small effect for facilitating lightweight because forming holes for water drainage for corrosion prevention decreases the strength of the cover itself and a thick member would be required for walking on or carrying an object on the pit.

In other words, it is difficult for the cover of Patent Document 1 to sufficiently achieve both lightweight and strength, as it does not take into consideration preventing lift on the cover.

Further, the lid for side trench described in Patent Document 2 fills a weight adjusting agent into hollow parts, requiring man hours, and therefore there is little effect in improving workability as the weight adjusting agent must be carried at the time of laying the lid. In addition, because the weight adjusting agent is filled inside, the heavy weight of the lid creates low workability when attempting to inspect or the like inside after laying, and there is also a risk in reducing the strength of the top plate by forming a large number of vent holes in the top plate. Moreover, because the vent holes face a vertical direction, there is also a risk that the vent holes become plugged by foreign objects or the like. Furthermore, there is a problem in that the air flow direction is perpendicular to the top plate, and because this is a perpendicular direction to the direction of receiving wind pressure at the time of a train passing (a direction from the side of the tracks toward the pit), airflow efficiency is not high.

In other words, the lid of Patent Document 2, in order to take into account the prevention of lift, as a result, is unable to achieve a lightweight, which is considered for workability, and securing sufficient strength is also difficult.

Further, the lid with the internal excessive-high pressure release valve described in Patent Document 3 is provided with a release valve in the center of the lid, but the mechanism is complicated and leads to cost increase for the lid itself. Moreover, because there is an operational portion, the valve operation may degrade over time, and on account of this, become unable to release a portion of the internal pressure. Also, because the release valve is provided near the center portion of the lid, there is a problem in that the strength of the lid may be weakened. Specifically, for the area near the release valve, because a large hole is formed in the lid, the strength of the lid main body may decrease and there is a risk that the valve may be damaged when a force is applied to the top of the release valve itself. However, strengthening the valve itself not only makes obtaining sufficient internal pressure release characteristics difficult due to the added weight of the valve itself, but as a result, this also brings an increase in the weight of the lid.

In other words, with the lid of Patent Document 3, strength and lightweight of the lid itself, together with cost, are sacrificed in order to release internal pressure, thereby making it difficult for a lid to achieve both strength and lightweight which is the objective in the first place.

Further, the pit cover described in Patent Document 4 is provided with an air flow path that communicates the inside and the outside of the pit on both edge portions, but the lightweight aspect of the lid is insufficient. Moreover, forming cut-out portions only on both side portions may cause stress to concentrate on the borders in a portion where the thickness changes. Therefore, strength is insufficient.

Additionally, because cut-outs are formed on both edge portions and the cover is formed in a shape corresponding to a step on an upper opening edge portion of the pit, compliance with the fluctuation (precision) of the pit opening width becomes difficult, and the air flow paths may be obstructed by the side walls of the pit opening edges.

Although there is not a specific description regarding the shape of the air flow path, by referencing the drawings and the like, there is concern for large pressure loss and that a sufficient reducing effect in the pressure difference cannot be achieved because a sufficient flow path cross-sectional area cannot be secured for the flow of air. However, when attempting to secure a flow path cross-sectional area by expanding the cut-outs in the direction of the center portion of the cover, the location where stress is concentrated moves toward the central direction of the cover, and as a result, as described above, it becomes difficult to obtain sufficient strength against the upper load of the cover.

As described above, the conventional cover for a pit, does not, have a simple structure that achieves a lightweight that takes into account efficiencies such as workability, for performing laying and performing inspections, and carrying and the like, and with a high strength against a load from above, and that can securely prevent the cover from flying off due to buoyancy that accompanies a pressure change inside and outside the pit.

In light of the problems described above, the present invention has an object to provide a pit cover that has a simple structure and that achieves both a lightweight and strength that does not lift up due to buoyancy that occurs when a train passes by the side of the pit, a laying structure of the pit cover, a manufacturing method, a laying method, and a method for adjusting buoyancy.

### Solution to Problem

In order to achieve the object given above, the first pit cover defined in Claim 1 is suggested. Further advantageous features are set out in the dependent claims.

Here, the space partitioned by the width direction ribs and the length direction ribs is a space where the surface that opposes the top plate is released and the respective ribs that stand on the reverse surface of the top plate make up wall portions and indicates a location surrounded by the width direction ribs and the length direction ribs. Note that both end portions of the width direction ribs indicate a portion that is positioned farther outward in a width direction than the length direction ribs formed on both ends in the pit width direction from the plurality of length direction ribs.

The pit cover includes a rib structure having an open portion on both end portions of the width direction ribs that has two functions of strength improvement and air flow path formation, and the rib structure formed in plurality on the portions other than both end portions of the width direction ribs that has a function of only strength improvement.

On the reverse surface of the top plate, a handhold rib is formed such that the width direction ribs and the handhold rib are integrally joined in the periphery of the cut-out portion that forms the handhold. As a result, the handhold can form the second air flow path while increasing the rigidity of the pit cover.

It is preferred that flow path maintaining means that overhang on both sides of the width direction edge portions of the top plate are formed on at least a portion of an end surface in the width direction of the pit cover, and when an end portion of the flow path maintaining means is made to contact a nearly vertical wall portion, a gap is maintained between a width direction edge portion of the top plate and the wall portion that can prevent the first air flow path from being obstructed.

In this case, the flow path maintaining means has a tapered shape formed on the end portions of the width direction ribs, and the end portions of the width direction ribs have a tapered shape that diverges downward from the connecting portion with the top plate.

In the first air flow path, a cross-sectional area formed by the top plate and the width direction ribs is a cross-section of when the space is sectioned in the length direction, and it is preferred that the cross-sectional area gets larger toward both sides in the width direction of the top plate.

It is preferred that the top plate has a convex shape that is raised upward in the center and the thickness of the top plate for the first air flow path becomes thinner toward the width direction end portions of the top plate, and the height of the width direction ribs and the length direction ribs is higher toward the center of the top plate.

It is preferred that the width of the width direction ribs gets narrower from near the center of the top plate toward both sides in the width direction. Here, the width of the ribs, as viewed from the reverse surface of the pit cover, is the width at the apex of the rib.

The width of the length direction ribs formed near the center in the width direction of the pit cover may be formed to be wider than the width of the length direction ribs formed on both end portion sides in the width direction.

It is preferred that the pit cover is formed in both the width direction and the length direction so that the surface shape of the pit cover is a convex shape raised upward with the center of the top plate as an apex, and linear protrusions having a rib shape are repeatedly formed in plurality facing an intersecting direction where spot protrusions are interposed, and the height of the spot protrusions is formed to be taller than the linear protrusions to provide roughness to act as slip prevention on the surface of the top plate.

A coating may be applied to the surface of the top plate for heat shielding or for slip prevention.

A plurality of protrusions may be formed outward on at least one side of side surfaces in the formation direction of the length direction ribs, and when the pit cover is placed, gaps may be formed by the protrusions between the mutual side surfaces of adjacent pit covers that allows a third air flow path to form that communicates between the back side of the top plate and the outside of the pit cover. Note that, the plurality of protrusions formed outward on the side surface in the length direction of the pit cover does not simply form a third air flow path, but functions to alleviate heat expansion of the pit cover by compressing and deforming the protruding portions when the pit cover is laid in succession in the length direction along the tracks.

According to the invention, both a high lightweight effect and strength can be achieved because width direction ribs and length direction ribs are formed mutually orthogonal to the reverse surface of the top plate. Further, pressure differences inside and outside of the pit can be resolved and lifting of the pit cover can be prevented because a space surrounded by the width direction ribs and the length direction ribs formed on the width direction end portions of the pit cover form an air flow path that communicates with outside of the cover.

Further, handholds are formed in the same direction as the air flow path using the ribs. Therefore, the work to lay the pit cover is easy. Further, the strength of the pit cover can be improved, pressure differences on the inside and outside of the pit cover can be more securely resolved, and lifting of the pit cover can be prevented because a cut-out portion forming the handhold forms an air flow path that communicates with the inside and outside of the pit cover, and because either of the first air flow paths or the second air flow path are formed on the width direction end portions of the pit cover as air flow paths that continuously cross the entire length in the length direction of the width direction end portions of the pit cover, and the rib structure having an open portion on both end portions in the width direction has two functions of strength improvement and air flow path formation, and the rib structure on the portions other than both end portions has a function of only strength improvement. Note that, the first air flow paths are preferred to be formed so as to be symmetrical by sandwiching the second air flow path.

Note that it is preferred that the width direction of the pit cover be placed in the width direction of the pit. If the air flow path is provided in the direction of the pit from the tracks of the train (the direction perpendicular to the laying direction of the pit), the air is generated by the travel of the train being able to flow more efficiently. Therefore, the air flow path according to the ribs and the air flow path according to the handholds are the same direction, and if this is the same direction as the width direction of the pit cover, the air in the pit can flow more efficiently. However, even if the air flow path according to width direction ribs and the air flow path according to the handholds are formed in directions that are respectively orthogonal, it goes without saying that a pit cover that has a slight reduction in efficiency for air within the pit to escape when a train travels by can still be used as a lightweight pit cover.

Further, the width direction ribs and the length direction ribs are formed integrally in a mutually orthogonal lattice having straight lines horizontally or vertically until near the outer periphery of the top plate. Further, a portion other than both end portions of the width direction ribs is formed in continuation relative to both end portions of the width direction ribs that configure the first air flow paths, and the length direction ribs and the portion other than both end portions of the width direction ribs make up wall portions where a rib structure is partitioned into a space so as to be surrounded in four directions (five directions including the top plate) by the wall portions is formed in plurality in horizontal and vertical continuation on the reverse surface of the top plate.

Therefore, both end portions of the one-piece width direction ribs can be made to be an element for configuring the first flow path, and the location other than both end portions (which is to say, a location that requires higher strength) forms a space surrounded in five directions as described above to form a rib structure that can improve the strength of the cover. In other words, this configuration does not simply form ribs to provide strength improvement and forms an air flow path at the end portion, but can provide two functions for strength improvement and flow path formation for the width direction ribs according to the location.

Further, a gradual reduction in the width of the width direction ribs from the center of the pit cover toward both edge portions allows a high strength to be secured near the center portion that requires the highest strength when a load is applied from above after placing the pit cover, and this allows lightweight to be achieved by eliminating unnecessary thickness in both side portions. In addition, the strength near the center portion that requires the highest strength can be increased because the width of the length direction ribs are formed to be wider than the width of the ribs that are formed on both end portion sides in the width direction for the width of the ribs formed near the center of the width direction of the pit cover.

Moreover, the width of the width direction ribs formed in a straight line narrow from the center of the pit cover toward both end portions. In conjunction with the change in width in the width direction ribs in the width direction, the space between the width direction ribs widens from the center of the cover toward both edge portions. Therefore, the flow path cross-sectional area of the air flow path (first air flow path) configured by the width direction ribs can be made to increase toward the end portions. Accordingly, pressure loss due to the flow of air in the air flow path can be suppressed to provide a more efficient airflow. Note that the flow path cross-sectional area contributes greatly to pressure loss, and when, for example, the air flow is not turbulent (laminar flow), it is defined by the Hagen-Poiseuille equation where pressure loss increases proportional to the square of the cross-sectional area, and therefore, when considering this aspect, the air pressure within the pit can be more effectively reduced.

Meanwhile, load bearing in the center portion of the top plate can be increased by thickening the panel thickness near the center in the width direction of the top plate. Further, the reverse surface of the top plate is formed diagonally upward from the length direction ribs formed on the outermost side in the width direction of the pit cover toward the width direction end portions of the top plate, and the thickness gradually thins from the center of the pit cover toward both end portions in the width direction so that the space of the airflow path can widen from the length direction ribs formed on the outermost side in the width direction to the width direction opening end portion.

Further, the pit cover is formed in a convex shape such that the surface shape of both the lateral direction and the length direction is raised upward with the center of the top plate as the apex. Further, linear protrusions having a rib shape are repeatedly formed in plurality on the surface of the pit cover facing an intersecting direction where spot protrusions are interposed as an unevenness for slip prevention on the surface of the top plate. Also, strength reduction that accompanies formation of the cut-outs for the handholds can be suppressed by forming the handhold ribs on the handhold such that the handhold ribs, the width direction ribs, and the length direction ribs are integrated.

Further, the air flow path can surely be secured when placing the pit cover on the pit without the side surface of the pit cover being obstructed even if the placement width of the pit cover slightly changes because the end portions of the width direction ribs (width direction end portions of the pit cover) have a tapered shape that diverges relative to the pit cover side wall upper end toward downward.

Moreover, the strength relative to a load from above the top plate can be increased by the arch effect by forming the center portion of the pit cover in a convex shape that gets lower toward the end portions of the width direction and the length direction. Further, according to the shape of the top plate, a higher strength can be secured in the center portion where a stress particularly increases, particularly in the center portion where stress is the greatest, by making the height of the width direction ribs and the length direction ribs to be higher toward the center of the top plate.

Note that in the pit cover of the present invention, the bottom position of the width direction ribs and the length direction ribs is nearly constant and the bottom surface is nearly flat without forming a step or the like on the bottom surface side (ribs) of the pit cover. Accordingly, as long as a pit cover is used that is sectioned to a predetermined width in the location where a shape for the pit is not fixed and the width of the pit cover placement portion narrows, the pit cover can be placed and achieve the effect described above.

Related to the invention is a laying structure of a pit cover that uses a pit cover comprising: a top plate; width direction ribs and length direction ribs formed on a reverse surface of the top plate and formed to be parallel and mutually orthogonal to the width direction and length direction of the top plate, respectively; and a pair of handholds in a cut-out shape, wherein a space that is partitioned by the width direction ribs and the length direction ribs opens in the width direction of the pit cover to form a first air flow path that communicates between the space and the outside of the pit cover in the end portion in the width direction of the pit cover, and the pit cover is disposed on the pit so that the first flow path faces the width direction of the pit.

The handholds are provided on both sides in the width direction of the top plate, cut-out portions that form the handholds that are formed in the flow path direction of the first air flow path make up a second air flow path that communicates between the back side of the top plate and the outside of the pit cover, the first air flow paths and the second air flow path are formed on the width direction end portions of the pit cover and continuously cross the entire length in the length direction of the width direction end portions so as to form an air flow path in the width direction end portions of the pit cover.

The first air flow paths are preferred to be formed so as to be symmetrical by sandwiching the second air flow path, and by doing this, not only is a lightweight pit cover devised but workability at the time of laying the pit cover can be improved from the perspective of improving weight balance of the pit cover.

Further, in the second pit cover of the present invention, defined in Claim 9, the handholds are provided on both sides in the length direction of the top plate, cut-out portions that form the handholds that are formed in a perpendicular direction to the flow path direction of the first air flow path make up a second air flow path that communicates between the back side of the top plate and the outside of the pit cover, and the pit cover may be disposed on the pit so that the second flow path faces the length direction of the pit.

The above-described laying structure of a pit cover that has a simple structure, that can achieve both lightweight and strength, and that does not lift up due to buoyancy generated when a train passes by the side of the pit can be provided.

The invention further resides in the manufacturing method of the pit cover of the invention as set out in the method claim.

According to the method of the invention, there is also excellent manufacturability and economic efficiency because manufacturing is possible by interchanging only the molds of both side portions even for pit covers of a plurality of sizes.

Also related to the invention is a laying method of a pit cover that includes: a top plate; width direction ribs and length direction ribs formed on the reverse surface of the top plate and formed to be parallel and mutually orthogonal to the width direction and length direction of the top plate, respectively; and a pair of handholds in a cut-out shape provided on both sides in the width direction of the top plate, a space that is partitioned by the width direction ribs and the length direction ribs opens in the width direction of the pit cover to form a first air flow path that communicates between the space and the outside of the pit cover in the end portions in the width direction of the pit cover, and using a pit cover where cut-out portions that form the handholds that are formed in the flow path direction of the first air flow path make up a second air flow path that communicates between the back side of the top plate and the outside of the pit cover, the first flow path and the second flow path face the width direction of the pit, and the pit cover is disposed on the pit so that the first air flow path and the second air flow path continuously cross the entire length in the length direction of the width direction end portions of the pit cover, and the first air flow path is symmetrically disposed by sandwiching the second air flow path on the width direction end portions of the pit cover.

Further, the laying method of a pit cover includes: a top plate; width direction ribs and length direction ribs formed on the reverse surface of the top plate and formed to be parallel and mutually orthogonal to the width direction and length direction of the top plate, respectively, and a pair of handholds in a cut-out shape provided on both sides in the length direction of the top plate, a space that is partitioned by the width direction ribs and the length direction ribs opens in the width direction of the pit cover to form a first air flow path that communicates between the space and the outside of the pit cover in the end portions in the width direction of the pit cover, and using a pit cover where cut-out portions that form the handholds that are formed in a direction orthogonal to the flow path direction of the first air flow path make up a second air flow path that communicates between the back side of the top plate and the outside of the pit cover, the pit cover is placed on the pit so that the first flow path faces the width direction of the pit and the second flow path faces the length direction of the pit.

According to the above-described laying method, a laying structure with excellent workability and without lift on the cover can be provided.

Further related to the invention is a method for adjusting buoyancy of a pit cover relative to a laying structure of a pit cover, that includes: using a pit cover including a top plate, width direction ribs and length direction ribs formed on the reverse surface of the top plate and formed to be parallel to and mutually orthogonal to the width direction and length direction of the top plate, respectively, and a pair of handholds in a cut-out shape; opening a space that is partitioned by the width direction ribs and the length direction ribs in the width direction of the pit cover to form an air flow path that communicates between the space and the outside of the pit cover in the end portions in the width direction of the pit cover; disposing the pit cover on the pit so that the flow path faces the width direction of the pit; and adjusting buoyancy of the pit cover when a train passes along the pit by adjusting the cross-sectional area of the flow path and the thickness of the top plate at the location surrounded by the width direction ribs and the length direction ribs.

According to the above-described method, a method for adjusting buoyancy can be obtained without lift on the cover and easy for a simple design depending on the situation.

According to the present invention, a pit cover that has a simple structure, that can achieve both lightweight and strength, and that does not lift up due to buoyancy that occurs when a train passes by the side of the pit, a laying structure of the pit cover, a manufacturing method, a laying method, and a method for adjusting buoyancy can be provided.

### BRIEF DESCRIPTION OF THE DRAWINGS

FIG. 1 is a drawing illustrating a pit cover 1; FIG. 1A is a top surface perspective view; and FIG. 1B is a reverse surface perspective view.
FIG. 2A is a plan view of the pit cover 1, and FIG. 2B is a plan view of a pit cover 4.
FIG. 3 is a bottom view of the pit cover 1.
FIG. 4 is a drawing illustrating the pit cover 1; FIG. 4A is a front view of the pit cover 1 from the arrow A view of FIG. 2; and FIG 4B is a left side view of the pit cover 1 from the arrow B view of FIG. 2.
FIG. 5 is a drawing illustrating the pit cover 1; FIG. 5A is a cross-sectional view of the line C-C of FIG. 3; and FIG. 5B is a cross-sectional view of line D-D of FIG. 3.
FIG. 6 is a drawing illustrating a manufacturing method of the pit cover 1.
FIG. 7 is a drawing illustrating a pit cover 10; FIG. 7A is a top surface perspective view, and FIG. 7B is a reverse surface perspective view.
FIG. 8 is a plan view of the pit cover 10.
FIG. 9 is a bottom view of the pit cover 10.
FIG. 10 is a drawing illustrating the pit cover 10; FIG. 10A is a front view of the pit cover 10 from the arrow A view of FIG. 2; and FIG 10B is a left side view of the pit cover 10 from the arrow B view of FIG. 2.
FIG. 11 is a magnified view illustrating the shape of width direction ribs 7a and length direction ribs 7b.
FIG. 12 is a drawing illustrating a laying structure of the pit cover 1.
FIG. 13 is a cross-sectional view illustrating a state of use of the pit cover 1.
FIG. 14 is a magnified view of a section Q of FIG. 13A.
FIG. 15 is a bottom view of a pit cover 20.
FIG. 16 is a drawing illustrating a laying structure of the pit cover 20.
FIG. 17 is a bottom view of a pit cover 10a.
FIG. 18 is a cross-sectional view illustrating a state of use of the pit cover 10a.
FIG. 19 is a drawing illustrating a relationship between a shape of a pit cover and buoyancy.
FIG. 20 is a drawing illustrating a disposition of a pit and a shape of a conventional pit cover.

### BEST MODE FOR CARRYING OUT THE INVENTION

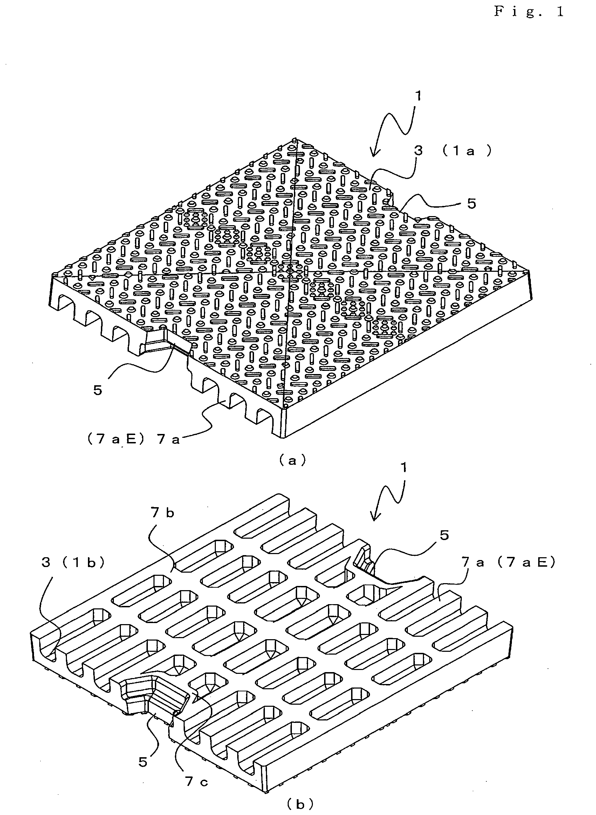

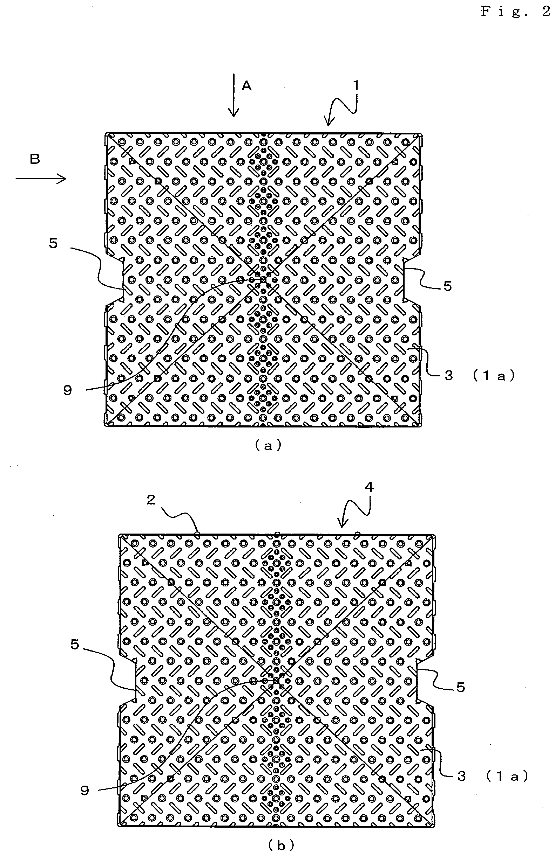

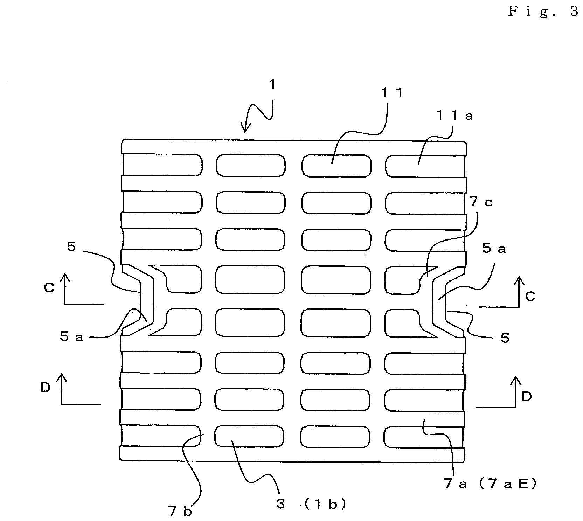

A pit cover 1 according to an embodiment of the present invention will be described hereinafter. FIG. 1 is a drawing illustrating the pit cover 1; FIG. 1A is a top surface perspective view; and FIG. 1B is a reverse surface perspective view. Further, FIG. 2A is a plan view of the pit cover 1, and FIG. 3 is a bottom view of the pit cover 1.

The pit cover 1 includes a top plate 3 having a nearly rectangular plate-like shape, ribs provided on the reverse surface side of the top plate 3, handholds 5 provided on both ends in a width direction, and the like. The pit cover 1 is made of resin, and although a material is not specified, as long as there is a certain degree of strength and durability, taking into account working efficiencies such as cost, lightweight, and the like, a resin composition made from a recycled plastic (polyethylene, polypropylene, and the like) and a fire retarding material, and the like can be used.

A plurality of Rib shaped linear protrusions and a plurality of spot protrusions are formed on a top surface 1a side of the pit cover 1 respectively as detailed roughness as necessary for the purpose of slip prevention and the like. It is preferred that the height of the spot protrusions are formed to be greater than that of the linear protrusions such that the spot protrusions grip the bottom of the shoes of a person walking while the linear shape acts as slip prevention. Note that the bottom of the shoes of a person walking contacts areas in which the spot protrusions, linear protrusions, and the like are not formed, respectively, and fit to the roughness of the pit cover such that a slip prevention effect is demonstrated. Therefore, it is preferred that suitable gaps are formed between each of the linear protrusions and between the linear protrusions and the spot protrusions such that the bottom of the shoes can fit the roughness of the pit cover.

For example, the gaps between the linear protrusions are preferably approximately 4 to 6 times the width of the linear protrusions, and in the case of the spot protrusions, it is preferred to be approximately 2 to 4 times the diameter of the spot protrusions. Further, it is preferred that the heights of both the spot protrusions and the linear protrusions are approximately several mm.

Here, the linear protrusions having a rib shape on the top surface of the pit cover 1 are repeatedly formed in plurality facing intersecting directions where spot protrusions are interposed. By this, a person walking can safely walk on the surface of the pit cover even if it is wet with rain water or the like. The linear protrusions of this roughness provide a function as a rib and also contribute to improving the strength of the pit cover.

Further, a coating for heat shielding or slip prevention may also be applied to the surface of the top plate 3 of the pit cover 1. Applying a heat shielding coating onto the surface of the pit cover 1 improves weather resistance of the pit cover 1. Moreover, applying a slip prevention coating onto the surface of the pit cover 1 can more securely prevent slipping on the surface of the pit cover 1. Note that the pattern on a surface 1a (the shape and arrangement and the like of the roughness) is not limited to the example illustrated in the drawing for the pit cover 1 of the present invention.

Note that a plurality of protrusions 2 may be formed on one of the outer surfaces in the length direction of the pit cover 4 as in the pit cover 4 illustrated in FIG. 2B. The protrusions 2 prevent lift of the pit cover 4 due to heat expansion when placing the pit cover 4 in the length direction in succession. Note that the protrusions 2 may be formed on either the front surface side or the reverse surface side of both side parts in the length direction of the pit cover 4, and may be formed in both the front surface and the reverse surface. The shape and arrangement of the protrusions 2 are not limited to the example illustrated in the drawing.

Further, when forming the protrusions 2 on a first end portion in the length direction of the pit cover 4, or when forming the protrusions 2 on both ends in the length direction of the pit cover 4 in different forms, a mark may be formed on the surface of the pit cover 4 so that the orientation of the pit cover 4 can be easily visible. The description given below describes the pit cover 1 without the protrusions 2, however, the protrusions 2 may be suitably arranged in any of the other embodiments given below.

On the reverse surface 1b side of the pit cover 1, a plurality of width direction ribs 7a formed facing the width direction (lateral direction in FIG. 3) of the pit cover 1 and a plurality of length direction ribs 7b formed facing the length direction (vertical direction in FIG. 3) of the pit cover 1 nearly orthogonal to the width direction ribs 7a are formed, respectively. In other words, the width direction ribs 7a and the length direction ribs 7b are formed in integrally in a mutually orthogonal lattice having straight lines horizontally or vertically until near the outer periphery of the top plate. The apex of each of the width direction rib 7a and the length direction rib 7b (bottom surface side which is the opposite side to the top plate 3) is formed on the same plane. Here, in the width direction rib 7a as described above, a portion positioned farther to the outer side than the length direction rib 7b on the outermost side is an end portion 7aE of the width direction rib, and the first air flow path is formed by the end portion of the width direction rib 7a, the length direction rib 7b that intersects therewith, and the top plate 3. Note that in the description given below, a description given simply as the "width direction rib 7a" includes the "end portion 7aE of the width direction rib". Further, a detailed description of the shape of the width direction rib 7a and the length direction rib 7b will be given below.

Here, the location surrounded by the width direction rib 7a and the length direction rib 7b (with the width direction rib 7a and the length direction rib 7b making wall portions, the location surrounded by a total of five directions with the four directions of the surrounding wall portions and the reverse surface 1b of the top plate 3) becomes the space 11. In other words, the space 11 becomes a space that opens only to the bottom surface side of the pit cover 1. In addition, the space disposed on both end portions in the width direction of pit cover 1 becomes the space 11a that opens to the outer side in the width direction of the pit cover 1. The space 11a, what is to say, is formed so as to open only to the bottom surface side and one side surface side of the pit cover 1.

Handholds 5 are provided on both sides in the width direction of the pit cover 1. The handholds 5 have a cut-out shape in a plan view where a portion of the end portion of the top plate 3 is cut out. The handholds 5 become the location where the pit cover 1 is held by hand when laying the pit cover 1.

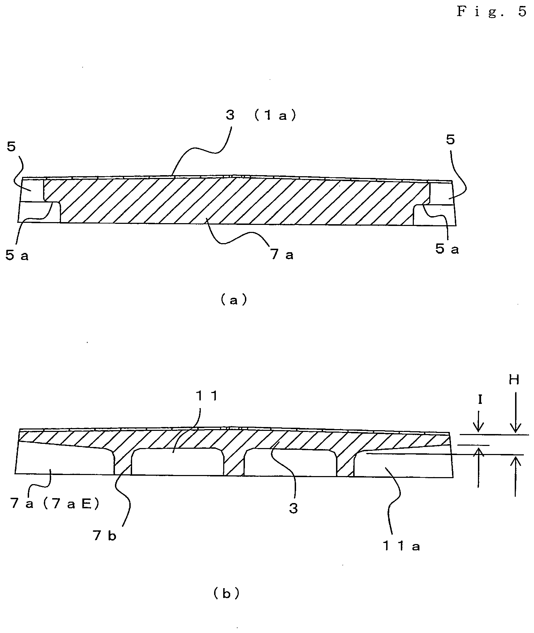

FIG. 5A is a cross-sectional view of the pit cover 1, and is a cross-sectional view of the line C-C in FIG. 3. A step portion 5a is formed on the reverse surface side of the handhold 5 for holding the pit cover 1 by hand, and a handhold rib 7c is provided so as to surround the periphery of the step portion 5a. In other words, the handhold rib 7c is formed a predetermined distance (via the step portion 5a) from the cut-out portion. Note that, in the handhold 5, a region below the pit cover 1 (top plate 3) and a region outside of the pit cover 1 communicate.

Note that, as illustrated in FIG. 3, the handhold rib 7c is integrally formed joined with the width direction rib 7a. The result is that a rib structure can be made where ribs around handholds are surrounded by a total of five directions and a periphery that forms a space that opens only to a bottom surface direction is surrounded. In the example illustrated in FIG. 3, both end portions of a total of three width direction ribs 7a, which are the width direction rib 7a positioned in the center portion in the length direction of the pit cover 1 and the pair of adjacent width direction ribs 7a, are integrally joined so as to be confluent with the handhold rib 7c.

Integrating the width direction rib 7a and the handhold rib 7c into one piece can suppress the strength reduction that accompanies formation of the cut-out. Note that the height of the handhold rib 7c may be formed to be lower than the height of the width direction rib 7a and the length direction rib 7b so as to form a step in the rib where these ribs can be joined smoothly. By configuring in this manner, the handhold becomes easy to grasp and the air flow path to be described later can be surely secured.

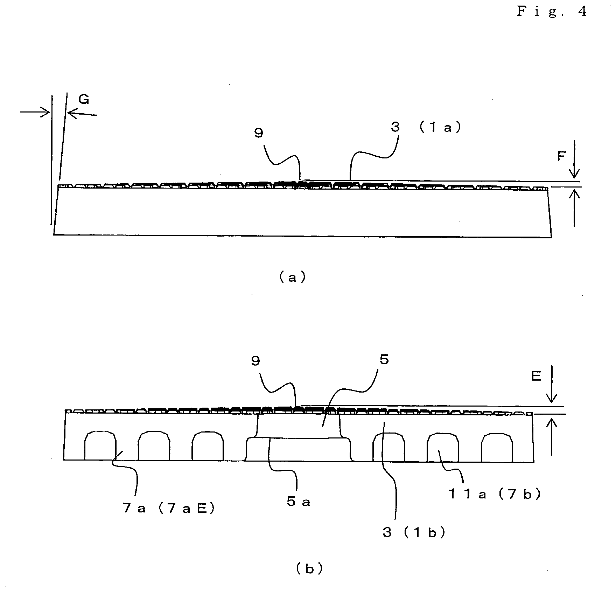

FIG. 4A is a front view and a rear view (side surface view in the length direction) of the pit cover 1 and is an arrow A view of FIG. 2. The top plate 3 of the pit cover 1 is formed in a convex shape upward with the top plate center 9 as the apex. In other words, the pit cover 1 is formed so that the top plate center 9 is the highest point and it gets lower toward the end portions of the top plate 3.

The taper angle formed on the top surface of the top plate 3 may be approximately 1°, and if the pit cover 1 is, for example, a shape of approximately 500 mm x 530 mm, the height difference (F in the drawing) between the top plate center 9 and the length direction end portion may be approximately 5 mm. Note that, as described above, because the bottom surfaces of the width direction ribs 7a and the length direction ribs 7b match, the respective rib heights according to the shape of the top plate 3 become taller toward the top plate center 9 of the pit cover 1.

Both side portions (both end portions of the width direction ribs 7a) in the width direction of the pit cover 1 are formed in a tapered shape that diverges from the top plate 3 side toward downward. In other words, a taper is formed which is a flow path maintaining means so that the bottom surface side of the pit cover 1 protrudes in the width direction with respect to the width direction edge portions of the top plate 3. Note that the taper angle (G in the drawing) may be approximately, for example, 5°.

FIG. 4B is a left side view (side view in the width direction) of the pit cover 1 and is an arrow B view of FIG. 2. Note that the right side view of the pit cover 1 is similar and that the left and right are expressed objectively. As described above, the top plate 3 of the pit cover 1 is formed in a convex shape upward with the top plate center 9 as the apex in a length direction cross-section of the pit cover. The taper angle may be approximately 1°. If the pit cover 1 has the shape of, for example, approximately 500 mm x 530 mm, the height difference (E in the drawing) between the top plate center 9 and the width direction end portions may be approximately 5 mm. The thickness of the pit cover in the center portion of the top plate can be increased by the amount of this height difference.

Additionally, making the thickness of the center portion of the top plate to be thicker than the thickness of near the end portions allows not only the rigidity of the pit cover 1 to be increased but also enables the weight of the pit cover 1 to be adjusted. In other words, as a countermeasure to the buoyancy on the pit cover 1, when a predetermined weight is required, lightening the pit cover end portions as a rib structure and thickening only the thickness of the center portion of the pit cover may improve the weight and rigidity. Here, when considering only the top plate without the ribs, the top plate can be formed in the shape of an arch which not only simply thickens the top plate but also increases the rigidity of the top plate by virtue of the top plate shape.

Note that the heights of the uneven shapes on the top surface 1a of the top plate 3 may not be all uniform, but the heights on the top surface 1a of the surface roughness may be formed to be taller toward the end portions of the top plate 3 and the top surface of the surface roughness may be formed to be nearly level. By configuring in this manner, the overall rigidity of the pit cover may be further increased.

As described above, the handholds 5 and the space 11a open in the side surface direction in the width direction of the pit cover 1. Accordingly, with the pit cover 1, a region below the pit cover 1 (top plate 3) and a region outside of the pit cover 1 communicate in the side part of the width direction.

FIG. 5B is a cross-sectional view of the pit cover 1 and is a cross-sectional view of the line D-D in FIG. 3. Here, the pit cover is formed in a convex shape upward with the top plate center as the apex in a width direction cross-section in addition to the length direction cross-section described above. The thickness of the top plate 3 gradually thins from the center of the pit cover 1 to both end portions in the width direction. Accordingly, the reverse surface of the top plate 3 is formed facing diagonally upward so that the space 11a that forms a first flow path formed on the reverse surface of the top plate can become greater that diverges from the length direction ribs formed on the outermost side in the width direction of the pit cover toward the width direction end portions of the top plate. In other words, the thickness (I in the drawing) of the top plate 3 on the open portion side (the end portion direction of the pit cover 1) of the space 11a become smaller relative to the thickness (H in the drawing) of the top plate 3 on the far side (center direction of the pit cover 1) end portion of the space 11a. In this way, the rigidity of the center portion of the pit cover can be increased by thickening the thickness of the center portion of the pit cover.

For example, if the thickness (H in the drawing) of the top plate 3 is approximately 22 mm, the thickness (I in the drawing) of the width direction end portions of the top plate 3 may be approximately 11 mm. In other words, the height of the space 11a gets higher toward the end portions for the space 11a that communicates between a region below the pit cover 1 (top plate 3) and a region outside of the pit cover 1.

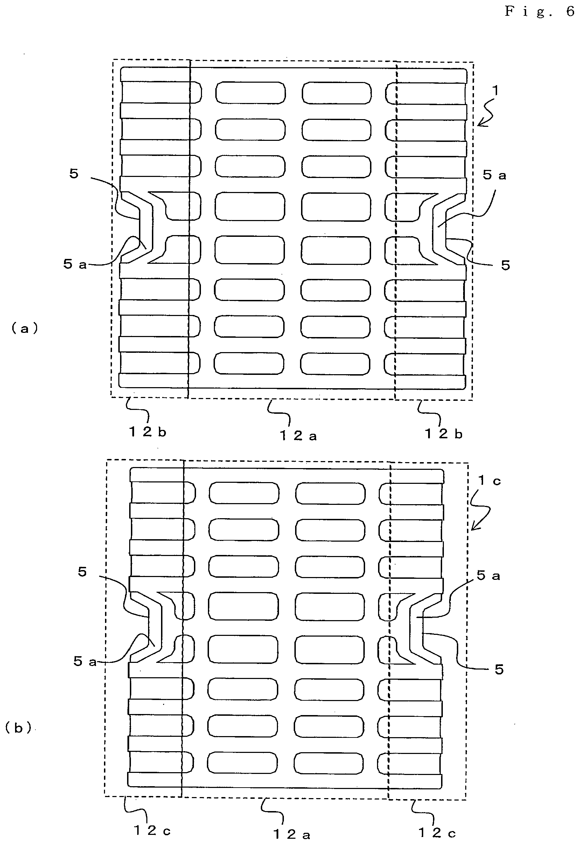

The pit cover 1 is molded by injection molding or the like. FIG. 6A is a reverse surface view of the pit cover 1 and is a drawing illustrating a manufacturing method of the pit cover 1. The mold for molding the pit cover 1 is divided into three parts, specifically, molds 12b, 12a, and 12b. The mold 12b is used for molding near the location that makes up the flow path to be described hereinafter which is the end portion of the width direction of the pit cover 1. For example, the mold 12b molds only a portion that is further to the outer side than the length direction ribs 7b positioned to the outermost side in the width direction of the pit cover 1. Meanwhile, the mold 12a is a location for molding near the center portion of the pit cover 1 that includes the length direction ribs 7b.

The pit cover 1 has a width to be set according to the placement location. However, cost increase is problematic when attempting to manufacture every mold for each size. For this, as illustrated in FIG. 6B, using the mold 12a as is for different sizes of a pit cover 1c and using mold 12c that differs only in the width to the mold 12b allows a minimal number of molds to be prepared according to size and provides excellent economic efficiency.

Note that the metal molds may be divided with respect to the length direction instead of the width direction to accommodate a plurality of sizes of pit covers, the location of the metal mold 12a of the center portion may be prepared in a plurality of sizes, and the metal mold 12b for both side parts may be used in common with pit covers of a plurality of sizes.

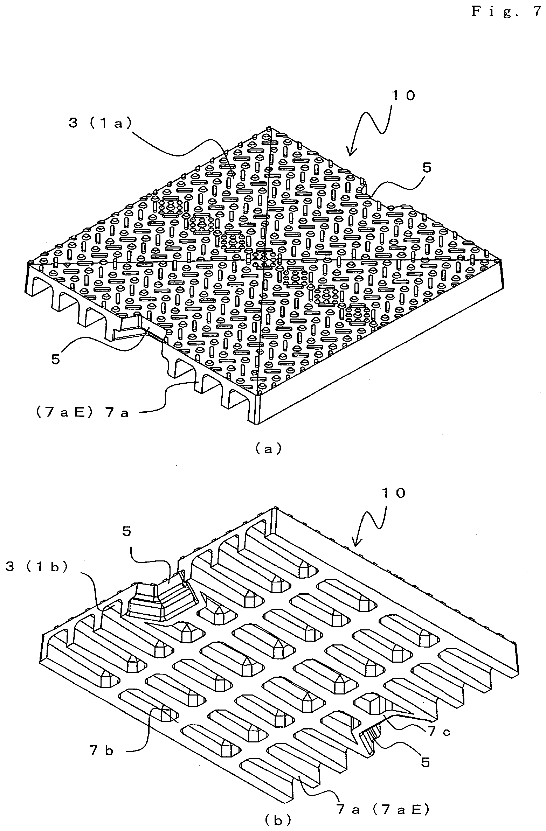

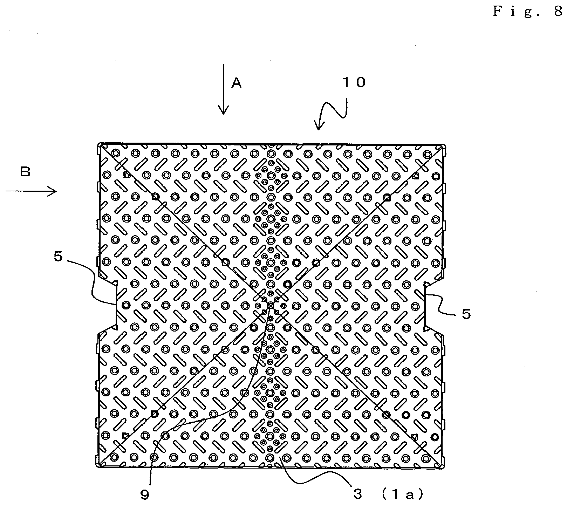

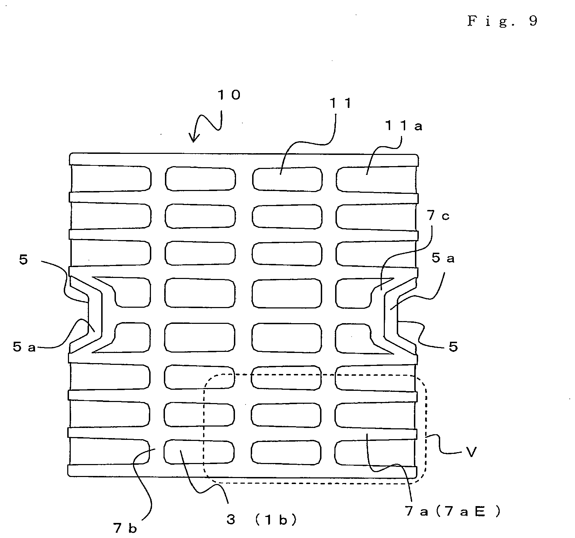

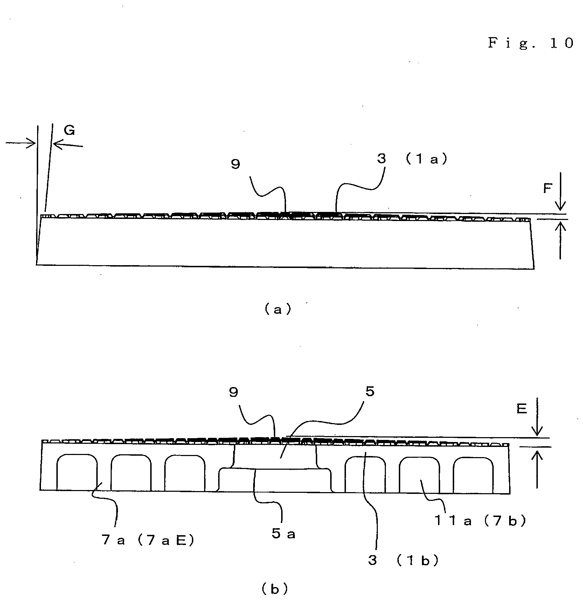

Next, a pit cover of another embodiment will be described. FIG. 7 is a drawing illustrating a pit cover 10; FIG. 7A is a top surface perspective view; and FIG. 7B is a reverse surface perspective view. Further, FIG. 8 is a plan view of the pit cover 10, and FIG. 9 is a bottom view of the pit cover 10. Further, FIG. 10A is a front view of the pit cover 10 and an arrow A view of FIG. 8; and FIG. 10B is a left side view of the pit cover 10 and an arrow B view of FIG. 8. Note that, in the following description, the same reference numerals as those given in FIG. 1 to FIG. 4 are used and overlapping descriptions are omitted for configurations that achieve similar functions to those of the pit cover 1.

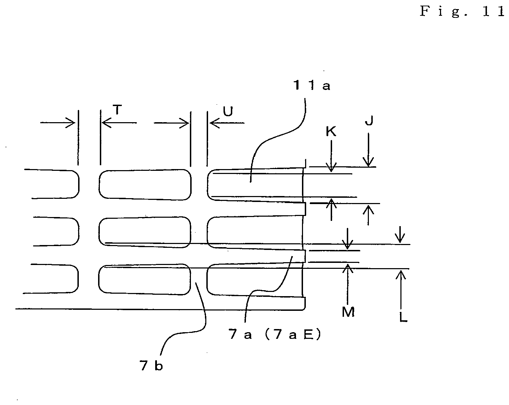

The pit cover 10 has a similar configuration to the pit cover 1 except for a different shape to the width direction rips 7a. FIG. 11 is a magnified view of the width direction ribs 7a and the length direction ribs 7b and is a magnified view of section V of FIG. 9. The width of the width direction ribs 7a narrows toward the end portions from the center of the pit cover 10. In other words, with the width direction ribs 7a, the width (M in the drawing) for the width direction end portions of the pit cover 10 narrows relative to the width (L in the drawing) of the center (joint portion with the length direction ribs 7b in the center) of the pit cover 10. For example, if the width of the center portion of the width direction ribs 7a is approximately 24 mm, then the width of the end portions may be approximately 15 mm.

Note that the form of the length direction ribs is similar to that of the pit cover 1. For the length direction ribs 7b, the widths (U in the drawing) disposed on both sides in the width direction become smaller relative to the width (T in the drawing) that runs down the center of the pit cover 10. In other words, in the example illustrated in FIG. 9, there are altogether three of the length direction ribs 7b formed, but the length direction rib 7b in the center has a width greater than the other length direction ribs 7b. For example, if the width of the length direction rib 7b in the center is approximately 24 mm, then the widths of the other length direction ribs 7b may be approximately 20 mm.

Note that because the widths of the width direction ribs 7a get smaller toward the width direction end portions, and the width of the space 11a (which is the length in the length direction of the pit cover and the gaps between the width direction ribs) becomes gradually larger from the center direction of the pit cover 1 toward the end portion. In other words, for the width of the space 11a, the width (J in the drawing) on the width direction end portion of the pit cover 1 is greater than the width (K in the drawing) on the center side of the pit cover 10.

As described above, with the space 11a, the thickness of the top plate 3 gets thinner toward the open portion side (the width direction end portion side of the pit cover 10), while at the same time, the width of the space 11a becomes greater. Accordingly, when the space 11a is sectioned in the length direction, the cross-sectional area of the U shaped portion (space 11a) surrounded by the top plate 3 (reverse surface 1b) and the width direction ribs 7a becomes greater toward the width direction end portions of the pit cover 10.

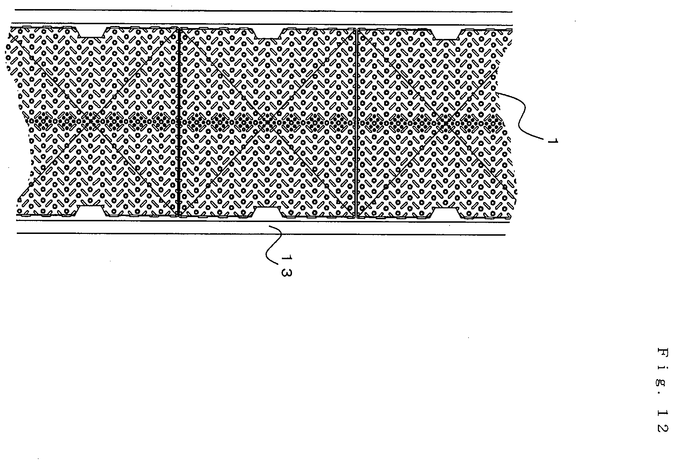

Next, the state of use of the pit cover 1 is described. Note that the pit cover 10 can also be used in a similar manner. FIG. 12 is a drawing illustrating the state where the pit cover 1 is placed on the pit 13. The pit 13, as illustrated in FIG. 12, is laid along the side of tracks. Further, the pit cover 1 is placed so that the length direction of the pit cover 1 corresponds to the length direction of the pit 13, and a plurality of pit covers 1 is laid in a line in the length direction. In other words, the width direction of the pit cover 1 corresponds to the width direction of the pit 13.

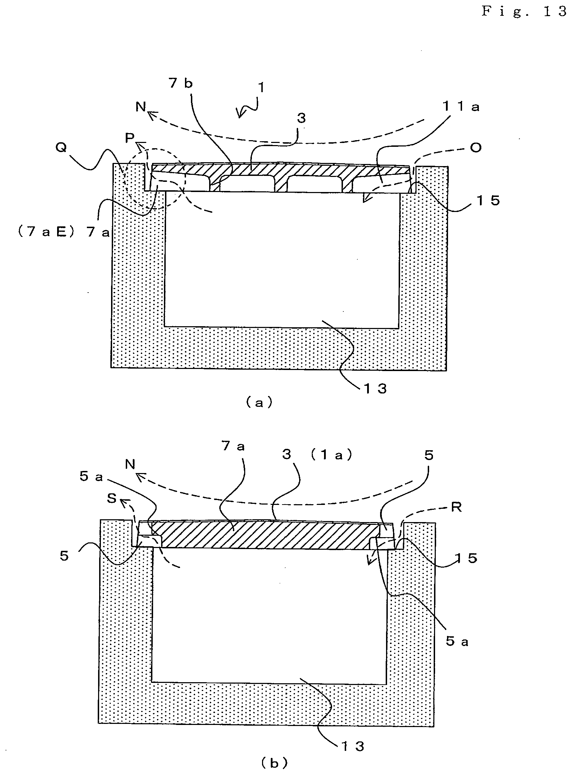

FIG. 13 is a cross-sectional view when the pit cover 1 is placed on the pit 13; FIG. 13A is a drawing that corresponds to a cross-section of the line D-D of FIG. 3; and FIG. 13B is a drawing that corresponds to a cross-section of the line C-C of FIG. 3. A step 15 is formed in the top edge portion of the U shaped pit 13. The pit cover 1 is placed so as to sit on the steps 15 on both sides. In other words, the gaps on the side surfaces of the steps 15 on both sides are set to be greater than the width of the pit cover 1.

When a train passes by on tracks placed next to where the pit cover 1 is laid, the wind that accompanies the passing by of the train has an effect (for example, N direction in the drawing). There is a particularly large effect by the wind in a perpendicular direction to the direction that the train is passing when the pit 13 is established as an annex to the tracks. In this case, as described above, a pressure difference occurs between the inside and the outside of the pit 13.

Specifically, when a train speed is approximately 300 km/h, a wind speed in the laying direction of a pit nearly parallel to the tracks of the train is measured as 2.7 m/s, but the wind speed in the laying direction of a pit cover perpendicular to the laying direction of the pit is 11 m/s, which is a wind speed of approximately 4 times that of the laying direction of the pit.

As illustrated in FIG. 13A, the space 11a of the pit cover 1 opens to the sides of the pit cover 1. Further, a gap is formed between the side surface of the step 15 and the pit cover 1. Therefore, against the wind from the sides, air easily flows to beneath the pit cover 1 (inside the pit 13) through the gap between the step 15 and the pit cover 1 and can reduce the air pressure in the pit (direction indicated by the arrow O in the drawing).

Similarly, the air in the pit 13 can easily flow to the outside through the gap between the step 15 and the pit cover 1 (direction indicated by the arrow P in the drawing). In other words, air flow paths (O and P in the drawing) that are a plurality of first air flow paths are formed facing the width direction on the width direction end portions of the pit cover 1. Therefore, the pressure difference between inside and outside the pit 13 can be resolved instantly.

Here, the location of the width direction ribs 7a positioned further outward than the length direction ribs positioned at the outermost side in the width direction of the pit cover 1 is "both end portions of the width direction ribs 7a". In FIG. 13A, the locations that are further to both end sides than the length direction ribs 7b other than the center length direction rib 7b are both end portions of the width direction ribs 7a. Further, in FIG. 13A, the location sandwiched by the length direction ribs 7b other than the center length direction rib 7b becomes "other than both end portions of the width direction ribs 7a".

Because the width direction ribs 7a are formed in continuation in straight lines as described above, the portion other than both end portions of the width direction ribs 7a are formed continuously relative to both end portions of the width direction ribs 7a that configure the first air flow path. At this time, when making the portion other than both end portions of the width direction ribs 7a and the length direction ribs 7b to be wall portions, as described above, the space 11 is formed so as to be surrounded by the top plate and the wall portions in four directions. In other words, the reverse surface of the top plate 3 is partitioned by a plurality of spaces 11, and the structure can be formed in plurality in horizontal and vertical continuation on the reverse surface of the top plate.

By configuring in this manner, the vicinity of both end portions of the width direction ribs 7a can be made to be an element for configuring an air flow path relative to the one-piece width direction ribs 7a, and the location other than both end portions of the width direction ribs 7a, which is a location that requires higher strength by the pit cover 1, forms the spaces in plurality in a horizontal and vertical continuation surrounded by five directions described above to thereby improve the strength of the cover.

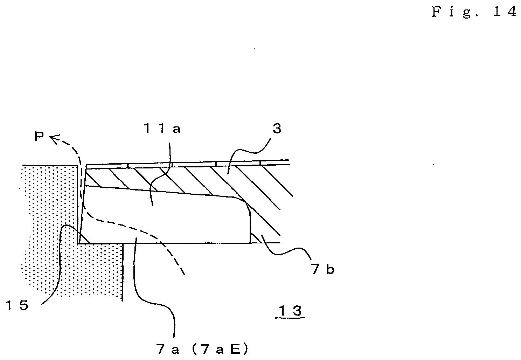

FIG. 14 is a magnified view of the section P in FIG. 13A. As described above, the end portions (width direction end portions of the pit cover 1) of the width direction ribs 7a form a taper that widens toward downward. The pit cover 1 is laid with a predetermined gap relative to the side part of the step 15, and the air flow path P does not become obstructed even if the pit cover 1 is placed to abut the side part of the step 15. Therefore, the air flow path can be secured regardless of the laying conditions of the pit cover 1.

Note that, in order to achieve this type of effect, a gap must be secured between the wall portions and the width direction edge portions of the top plate 3 when the pit cover 1 is placed to press against the wall portions (in other words, when the maximum width part of the taper shape, which is the flow path maintaining means, is made to contact the wall portion). For example, this gap is preferably set to be approximately from 10 mm to 15 mm. This is because, if the gap is too small, a sufficient flow path maintaining effect will not be obtained, and if the gap is too large, there is a risk of foreign objects and the like penetrating into the pit.

Similarly, as illustrated in FIG. 13B, the handholds 5 open on the side (upward) of the pit cover 1. Further, a gap is formed between the side part of the step 15 and the pit cover 1. Therefore, against the wind from the sides, air can easily flow to beneath the pit cover 1 (inside the pit 13) through the gap between the step 15 and the pit cover 1 (direction indicated by the arrow R in the drawing).

Similarly, the air in the pit 13 can easily flow to the outside through the gap between the step 15 and the pit cover 1 (direction indicated by the arrow S in the drawing). In other words, air paths (R and S in the drawing) are formed in the handholds 5, which are the second air flow paths, that directly communicate with the inside and the outside the pit in the width direction. Therefore, the pressure difference between inside and outside the pit 13 can be resolved instantly.

Note that, because the handholds 5 are formed in a cut-out shape, the flow paths do not get obstructed even if the pit cover 1 abuts the side surface of the step 15, and this is effective because flow paths are formed so that air can escape directly above the pit cover 1 from the handholds 5.

According to the embodiment described above, the reverse surface of the pit cover 1 (4, 10) is a rib structure where the width direction ribs 7a and the length direction ribs 7b are formed. Therefore, a light weight without unnecessary thickness and a high strength can be obtained. Further, because the space 11a opens to the end portion side in the width direction of the pit cover 1 (4, 10), the first air flow paths are formed such that a pressure difference between the inside and outside of the pit can be resolved when placed on the pit 13.

Further, the handholds 5 are provided, and by forming the handholds 5 into a cut-out shape, the second air flow paths are formed such that a pressure difference between the inside and outside of the pit can be more surely resolved when placed on the pit 13. Furthermore, if the protrusions 2 are provided on at least the front surface or rear surface of both side parts in the length direction of the pit cover, the protrusions abut against the side part of the pit cover or against other protrusions when the pit cover is placed in succession in the length direction. Therefore, gaps are formed on the abutting portions between pit covers, and this creates a third flow path. Therefore, in addition to the second flow path, the third flow path also achieves an effect for preventing lift.

Further, the end portions of the width direction ribs 7a (the width direction end portions of the pit cover 1 (4, 10)) are formed in a tapered shape to form the flow path maintaining means for preventing the air flow paths from becoming obstructed even when the width direction end portions of the pit cover 1 abut the wall portions of the placement part. Therefore, the first air flow path does not become obstructed even when the pit cover 1 (4, 10) is placed so as to contact the side surface of the step 15.

Note that the flow path maintaining means may not be only the tapered shape of the width direction ribs that diverge toward downward, but may be provided in other forms as long as a gap between the wall portions is maintained when the width direction end portions of the pit cover are in contact with the wall portion.

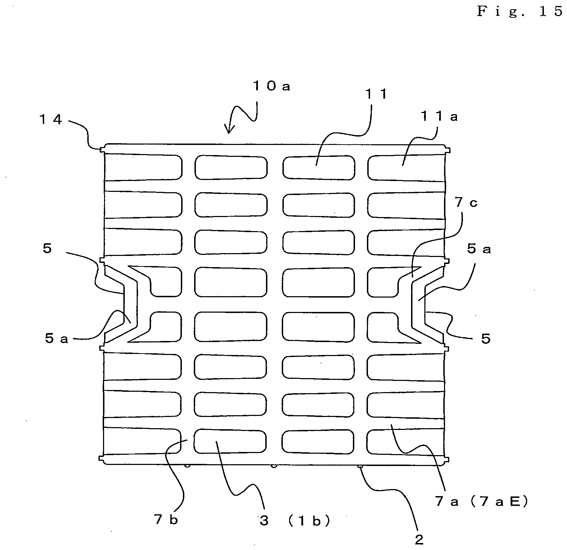

FIG. 15 is a bottom view illustrating the pit cover 10a. The pit cover 10a is formed not having the end portion of the width direction ribs 7a to be in a tapered shape but is formed having a protrusion 14 on a portion of the end portion. In other words, the protrusion 14 is formed so as to protrude outward from both edge portions in the width direction of the top plate 3.

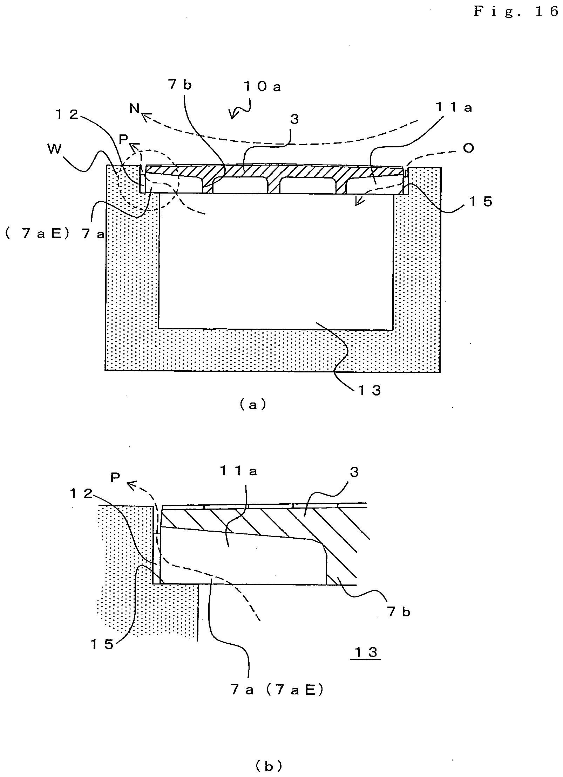

FIG. 16A is a drawing illustrating the pit cover 10a placed on the pit 13, and FIG. 16B is a magnified view of the section W of FIG. 16A. As described above, the pit cover 10a is formed from both edge portions in the width direction of the top plate 3 to outward so that a portion or the entirety of the end portion of the width direction ribs 7a protrude toward both sides. Accordingly, the end portion in the width direction of the pit cover 10a becomes the tip of the protrusion 14.

By configuring in this manner, a plurality of flow paths (O and P in the drawing), which are the first air flow paths, do not become obstructed when placing the pit cover 10a on the pit 13 and even when the end portions of at least one side are in contact with the wall portion on the placement part of the pit 13. In other words, by having a portion or the entirety of the width direction ribs 7a protrude in the width direction, it can function as the flow path maintaining means that prevents the flow paths from being obstructed. Note that, the shape and arrangement of the protrusions 14 are not limited to the example illustrated in the drawing. For example, the protrusions 14 may be formed on a part of the width direction end portion and may be made to protrude in its entirety.

Furthermore, because the handholds 5 are formed in a cut-out shape and are open above the pit cover 1 (4, 10, 10a), the second flow path does not become obstructed even when the pit cover 1 and the like is placed so as to contact the side surface of the step 15. Therefore, the flow path can surely be secured.

Furthermore, because the first air flow path and the second air flow path are formed in the same direction as the pit cover 1 (4, 10, 10a) and are also formed to face in the direction that faces the pit from the side of the tracks where a train is traveling (a direction perpendicular to the direction that the train is traveling) when laid on the pit 13, the airflow for the inside and outside of the pit is smooth, and a pressure difference between the inside and the outside of the pit can be surely resolved. Furthermore, because the air flow path is not formed in the center in the width direction of the pit, there is no reduction in the strength of the pit cover 1 (4, 10, 10a) that accompanies the formation of an air flow path.

Furthermore, the greatest stress occurs in the center of the pit cover 1 (4, 10, 10a) for loads from above on the pit cover 1 (4, 10, 10a). However, the ribs formed in the pit cover 1 (4, 10, 10a) are wider (thicker) near the center of the pit cover 1 (4, 10, 10a), and the width (thickness) gets smaller toward the end portion. Therefore, an extremely high strength can be secured without bringing excessive strength and weight increase.

Further, because the center of the pit cover 1 (4, 10, 10a) is formed in a convex shape, a high strength can secured relative to a load from above on the pit cover 1 (4, 10, 10a) due to the arch effect of the pit cover 1 (4, 10, 10a). At this time, water pooling can also be prevented on the pit cover 1 (4, 10, 10a) due to the slight taper formed on the top surface of the pit cover 1 (4, 10, 10a).

Furthermore, because the shape of the top plate 3 is a convex shape and the bottom surface (bottom surface of the width direction ribs 7a and the length direction ribs 7b) of the pit cover 1 (4, 10, 10a) is arranged on the same plane, the height of the respective ribs become taller toward the center of the pit cover 1 (4, 10, 10a). Therefore, the vicinity of the center of the pit cover 1 (4, 10, 10a) can be surely reinforced.

Further, with the space 11a, because the thickness of the top plate 3 gets smaller toward the width direction end portion of the pit cover 1 (4, 10, 10a), the cross-sectional area of the first air flow path (flow path cross-sectional area) gets larger toward the width direction end portions. Therefore, the pressure loss of air that flows in the air flow path is reduced to thereby more surely secure a flow of air inside and outside of the pit.

Further, with the pit cover 10, because the width of the width direction ribs 7a gets smaller toward the width direction end portion, the cross-sectional area of the first air flow path (flow path cross-sectional area) gets larger toward the width direction end portions. Therefore, the pressure loss of air that flows in the air flow path is reduced to thereby more surely secure a flow of air inside and outside of the pit.

Furthermore, because handhold ribs 7c are formed around the periphery of the handholds 5, strength reduction due to the cut-outs in the handholds 5 can be suppressed, and because the handhold ribs 7c and the width direction ribs 7a are integrally joined, stress in the vicinity of the handholds 5 can be surely transferred to the width direction ribs 7a. Therefore, stress does not concentrate in the vicinity of the handholds 5.

Moreover, because the bottom surfaces of the pit cover 1 (4, 10, 10a) (the bottom surface of the width direction ribs 7a and the length direction ribs 7b) are arranged on the same plane, the width direction end portions of the pit cover 1 (4, 10, 10a) may be sectioned so that the width of the pit cover after sectioning can be made to be smaller than the opening width of the upper end of the pit to allow an air flow path to be secured in the width direction even when the pit cover 1 (4, 10, 10a) cannot be placed between the steps 15 when the widths of the mutual steps 15 are narrowed due to work precision. Because the space 11a opens to the width direction end portion side, air flow paths can be surely secured even when the end portion of the pit cover 1 (4, 10, 10a) is sectioned and removed.

The present invention can be applied to a flying off-preventing pit cover of a structure that has a similar structure to the pit cover of the present invention.

For example, the number of width direction ribs 7a and the length direction ribs 7b to be placed is not limited to the example illustrated in the drawing. The size and required strength and the like of the pit cover can be suitably set. Furthermore, as the pit cover, an example where the width direction and the length direction are nearly the same length is illustrated; however a longer length relative to the length direction may also be set. The size of the pit cover and the placement location may be suitably set according to the weight and the like.

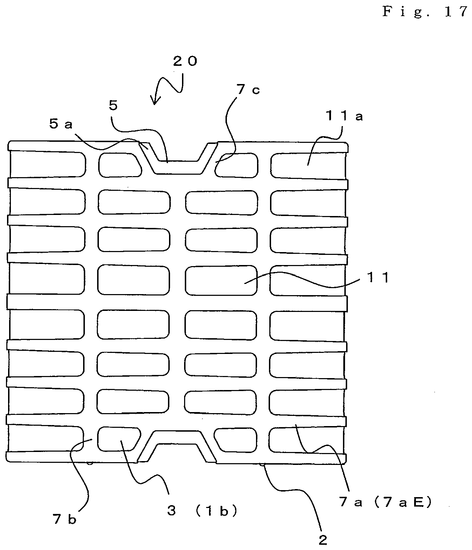

Further, as illustrated in FIG. 17, a pit cover 20 may be used that forms the handholds 5 in the length direction. The pit cover 20 is disposed in a position that differs by 90° from the pit cover 1 (4, 10, 10a). Accordingly, the handhold ribs 7c in the pit cover 20 are integrally joined with not only the width direction ribs 7a but also the length direction ribs 7b. Moreover, a plurality of protrusions 2 may be formed on the outer surface of the length direction side part of the pit cover 20 as needed to prevent lift of the pit cover due to heat expansion when the pit cover is disposed continuously in the length direction.

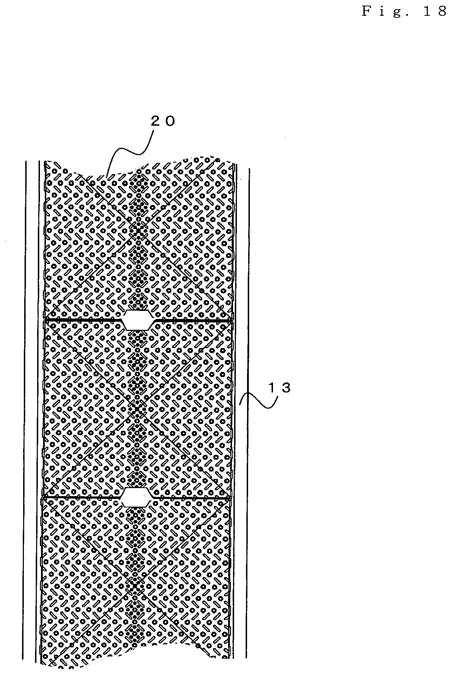

FIG. 18 is a drawing illustrating the state where the pit cover 20 is provided on the pit 13. As illustrated in FIG. 18, the handholds 5 are disposed not on the end portions of the pit but in the center when the pit cover 20 is placed on the pit. Accordingly, when using the pit cover 20, the handholds 5 of the adjacent pit covers 20 oppose each other, and the second flow path is formed in the center of the pit. Even when configuring in this manner, a similar effect to that with pit cover 1 and the like can be achieved because the first flow path is in the width direction of the pit. Note that, in FIG. 18, the protrusions 2 are omitted in the drawing, but as described above, the protrusions 2 may be provided on the side surface of one or both sides as needed.

Note that design of the air flow paths and the weight of the pit cover as described above are critical to preventing lift of the pit cover. In the present invention, modifying the width of the width direction ribs 7a and the thickness of the top plate 3 allows the flow path cross-sectional area to be easily changed. Furthermore, increasing the thickness particularly in the vicinity of the center portion of the top plate 3 increases the weight without reducing the flow path cross-sectional area. In the present invention, according to conditions such as placement location, suitably setting the width of the width direction ribs 7a, the thickness of the top plate 3, and the like, enables the buoyancy on the pit cover to be easily adjusted.

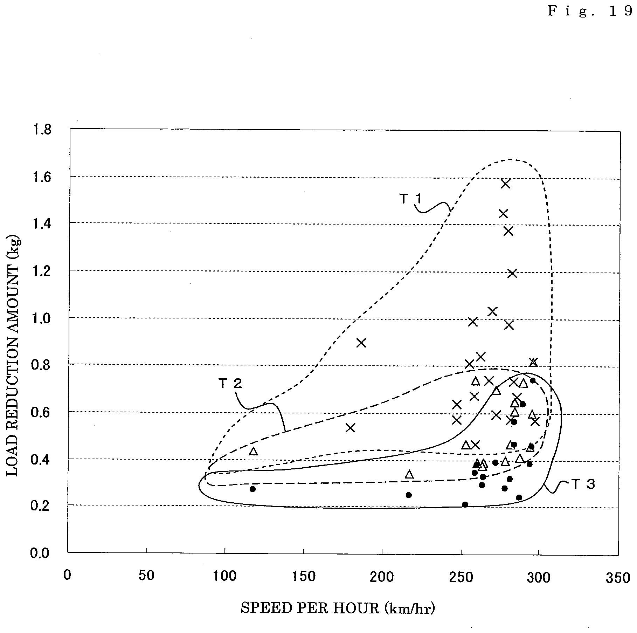

FIG. 19 shows the results of evaluating buoyancy (load reducing amount) that occurs on a pit cover in conjunction with wind pressure from a train traveling on tracks for various forms of pit covers placed by the side of tracks. Evaluation methods are given below.

First, pit covers having respective shapes were placed on a pit at the side of tracks, and a load sensor was provided on the back side. Note that the pit cover shapes included a conventional pit cover in which a flow path was not provided in the width direction of the pit (that is, the side portion of the space 11a was obstructed in the example illustrated in FIG. 3) (T1), as well as the pit cover 1 (T2), and the pit cover 10 (T3).

When a train traveled on the tracks, the change in load on the pit cover was measured for each wind pressure (amount of wind) according to the speed of the train. With T1 (conventional cover), there was a large variance, but the load reduction amount on the pit cover when a train was traveling particularly at a high speed (not less than 200 km/h) was large enough for there to be a risk that the pit cover would fly off.

In contrast to this, the pit covers of the present invention (T2, T3) had a small load reduction amount even when a train traveled at high speed demonstrating that the buoyancy acting on the pit cover was smaller. Particularly, the pit cover 10 (T3) in which the width direction ribs are formed in a tapered shape demonstrated an extremely small weight reduction amount up to approximately 250 km/h, and thus can more surely prevent a pit cover from flying off.

### REFERENCE NUMERALS

1, 4, 10, 10a ········· Pit cover
1a ········· Surface
1b ········· reverse surface
2 ········· Protrusion
3 ········· Top plate
5 ········· Handhold
5a ········· Step portion
7a ......... Width direction rib
7aE ········· End portion of width direction rib
7b ········· Length direction rib
7c ········· Handhold rib
9 ········· Top plate center
11, 11a ········· Space
12a, 12b, 12c ········· Mold
13 ········· Pit
14 ········· Protrusion
15 ········· Step
100 ········· Tracks
101 ········· Pit
103 ········· Pit cover

## Claims

1. A pit cover, comprising:
a top plate (3);
width direction ribs (7a) and length direction ribs (7b) formed integrally in a mutually orthogonal lattice of horizontal and vertical straight lines on a reverse surface of the top plate until near the outer periphery of the top plate, so as to be orthogonal to a length direction and a width direction of the top plate, respectively; and
a pair of handholds (5),
wherein:
a space (11a) partitioned by a first rib structure of both end portions (7aE) of the width direction ribs and of the length direction ribs disposed on the outermost side in the width direction of the pit cover opens towards the end portions in the width direction of the pit cover to form a plurality of first air flow paths communicating between the space and the outside of the pit cover in both end portions in the width direction of the pit cover, and
the length direction ribs that cross in a lattice together with the portions other than both end portions of the width direction ribs form the wall portions of a second rib structure that is partitioned into spaces formed in plurality in horizontal and vertical continuation with the reverse surface of the top plate, each of the spaces being surrounded in five directions by respective wall portions and the reverse surface of the top plate,
**characterized in that** the handholds are formed as cut-out portions on both end portions in the width direction of the pit cover at a center portion in the length direction, such as to form a second air flow path directly communicating between the back side of the top plate and the outside of the pit cover, so as to be joined with width direction ribs integrally by handhold ribs (7c) in the periphery of the cut-out portions,
the first air flow paths and the second air flow path are formed so that both the first air flow paths and the second air flow path face in the same direction in the width direction of the pit cover and the respective first air flow paths sandwich the second airflow path symmetrically to the second air flow path, and
the first air flow paths and the second air flow path are formed on the width direction end portions of the pit cover as air flow paths that continuously cross the entire length in the length direction between the length direction end portions of the pit cover.

2. The pit cover according to Claim 1, wherein, in the first air flow path, a cross-sectional area formed by the top plate (3) and the width direction ribs (8a) is a cross-section of when the space (11a) is sectioned in the length direction, and the cross-sectional area increases toward both end sides in the width direction of the top plate.

3. The pit cover according to Claim 1 or 2, wherein a flow path maintaining means overhanging on both sides from the width direction edge portions of the top plate (3) is formed on at least a portion of an end surface in the width direction of the pit cover, and when an end portion of the flow path maintaining means is made to contact a nearly vertical wall portion, a gap is maintained between a width direction edge portion of the top plate and the wall portion that can prevent the first air flow path from being obstructed.

4. The pit cover according to Claim 3, wherein the flow path maintaining means is formed on the end portion of the width direction ribs (7a), and is formed such that the end portion of the width direction ribs protrude in the width direction of the pit from the width direction end portion of the top plate.

5. The pit cover according to any one of Claims 1 to 4, wherein the width of the length direction ribs (7b) formed near the center in the width direction of the pit cover are formed to be wider than the width of the length direction ribs formed on both end portion sides in the width direction.

6. The pit cover according to any one of Claims 1 to 5, wherein the pit cover is formed in both the width direction and the length direction so that the surface shape of the pit cover is a convex shape raised upward with the center of the top plate (3) as an apex, and linear protrusions having a rib shape are repeatedly formed in plurality facing intersecting directions where spot protrusions are interposed to provide roughness to act as slip prevention on the surface of the top plate, with the height of the spot protrusions greater than the one of the linear protrusions.

7. The pit cover according to any one of Claims 1 to 6, wherein a coating is applied to the surface of the top plate (3) for heat shielding or for slip prevention.

8. The pit cover according to Claim 3 or 4, wherein the flow path maintaining means has a tapered shape formed on the end portions of the width direction ribs (7a), and the end portions of the width direction ribs have a tapered shape that diverges downward from the top plate (3).

9. A pit cover, comprising:
a top plate (3);
width direction ribs (7a) and length direction ribs (7b) formed integrally in a mutually orthogonal lattice of horizontal and vertical straight lines on a reverse surface of the top plate until near the outer periphery of the top plate, so as to be orthogonal to a length direction and a width direction of the top plate, respectively; and
a pair of handholds (5),
wherein:
a space (11a) partitioned by a first rib structure of both end portions (7aE) of the width direction ribs and of the length direction ribs disposed on the outermost side in the width direction of the pit cover opens towards the end portions in the width direction of the pit cover to form a plurality of first air flow paths communicating between the space and the outside of the pit cover in both end portions in the width direction of the pit cover, and
the length direction ribs that cross in a lattice together with the portions other than both end portions of the width direction ribs form the wall portions of a second rib structure that is partitioned into spaces formed in plurality in horizontal and vertical continuation with the reverse surface of the top plate, each of the spaces being surrounded in five directions by respective wall portions and the reverse surface of the top plate,
**characterized in that** the handholds are formed as cut-out portions on both end portions in the length direction of the pit cover at a center portion in the width direction, such as to form a second air flow path that directly communicates between the back side of the top plate and the outside of the pit cover, so as to be joined with length direction ribs integrally by handhold ribs (7c) in the periphery of the cut-out portions, and
the first air flow paths are formed on the respective width direction end portions of the pit cover as air flow paths that continuously cross the entire length in the length direction between the length direction end portions of the pit cover.

10. A manufacturing method of the pit cover described in Claim 1 or 9, comprising:
dividing a mold that manufactures the pit cover into a pair of first molds that configure a location that makes up the first flow path and a second mold that configures a nearly center section of the pit cover, the second mold being positioned in between the pair of first molds along the width direction; and
replacing only the first mold having different widths according to the width of the pit cover and using the second mold in the manufacture of the pit cover for all widths.

## Patentansprüche

1. Grubendeckel, umfassend:
eine obere Platte (3);
Breitenrichtungsrippen (7a) und Längsrichtungsrippen (7b), die einstückig in einem wechselweise orthogonalen Gitter horizontaler und vertikaler gerader Linien auf einer rückwärtigen Oberfläche der oberen Platte bis nahe dem Außenumfang der oberen Platte ausgebildet sind, um so jeweils orthogonal zu einer Längsrichtung und zu einer Breitenrichtung der oberen Platte zu sein; und
ein paar von Handgriffen (5),
wobei:
sich ein Raum (11a), der durch eine Rippenstruktur beider Endabschnitte (7aE) der Breitenrichtungsrippen und der Längsrichtungsrippen, die auf der äußersten Seite in der Breitenrichtung des Grubendeckels angeordnet sind, partitioniert ist, zu den Endabschnitten in der Breitenrichtung des Grubendeckels hin öffnet, um mehrere erste Luftströmungspassagen zu bilden, die für Kommunikation zwischen dem Raum und der Außenumgebung des Grubendeckels an beiden Endabschnitten in der Breitenrichtung des Grubendeckels sorgen, und
die Längsrichtungsrippen, die zusammen mit den anderen Abschnitten als den beiden Endabschnitten der Breitenrichtungsrippen in einem Gitter kreuzen, die Wandabschnitte einer zweiten Rippenstruktur bilden, die in Räume partitioniert ist, die mehrfach in horizontaler und vertikaler Fortsetzung der rückwärtigen Oberfläche der oberen Platte ausgebildet sind, wobei jeder der Räume in fünf Richtungen von entsprechenden Wandabschnitten und der rückwärtigen Oberfläche der oberen Platte umgeben ist,
**gekennzeichnet dadurch, dass** die Handgriffe als ausgeschnittene Abschnitte an beiden Endabschnitten in der Breitenrichtung des Grubendeckels an einem mittleren Abschnitt in der Längsrichtung ausgebildet sind, um so eine zweite Luftströmungspassage zu bilden, die für direkte Kommunikation zwischen der Rückseite der oberen Platte und der Außenumgebung des Grubendeckels sorgt, um so durch Handgriffsrippen (7c) im Randbereich der ausgeschnittenen Abschnitte einstückig mit Breitenrichtungsrippen verbunden zu sein,
wobei die ersten Luftströmungspassagen und die zweite Luftströmungspassage so ausgebildet sind, dass sowohl die ersten Luftströmungspassagen als auch die zweite Luftströmungspassage in die gleiche Richtung in der Breitenrichtung des Grubendeckels weisen und die jeweiligen ersten Luftströmungspassagen die zweite Luftströmungspassage symmetrisch zu dieser sandwichartig einfassen, und
wobei die ersten Luftströmungspassagen und die zweite Luftströmungspassage an den Breitenrichtungsendabschnitten des Grubendeckels als Luftströmungspassagen ausgebildet sind, die die gesamte Länge in der Längsrichtung zwischen den Längsrichtungsendabschnitten des Grubendeckels durchgängig kreuzen.

2. Grubendeckel nach Anspruch 1, wobei in der ersten Luftströmungspassage ein durch die obere Platte (3) und die Breitenrichtungsrippen (8a) gebildeter Querschnittsbereich ein Querschnitt ist, wenn der Raum (11a) in der Längsrichtung geschnitten wird, und sich der Querschnittsbereich zu beiden Endseiten in der Breitenrichtung der oberen Platte hin vergrößert.

3. Grubendeckel nach Anspruch 1 oder 2, wobei eine Strömungspassagen-Aufrechterhaltungseinrichtung, die auf beiden Seiten von den Breitenrichtungskantenabschnitten der oberen Platte (3) übersteht, an mindestens einem Abschnitt einer Endfläche in der Breitenrichtung des Grubendeckels ausgebildet ist und, wenn ein Endabschnitt der Strömungspassagen-Aufrechterhaltungseinrichtung in Kontakt mit einem nahezu vertikalen Wandabschnitt gebracht wird, eine Lücke zwischen einem Breitenrichtungskantenabschnitt der oberen Platte und dem Wandabschnitt, der verhindern kann, dass die erste Luftströmungspassage verstopft wird, aufrechterhalten wird.

4. Grubendeckel nach Anspruch 3, wobei die Strömungspassagen-Aufrechterhaltungseinrichtung am Endabschnitt der Breitenrichtungsrippen (7a) ausgebildet ist und so ausgebildet ist, dass der Endabschnitt der Breitenrichtungsrippen in der Breitenrichtung der Grube vom Breitenrichtungsendabschnitt der oberen Platte hervorragt.

5. Grubendeckel nach einem der Ansprüche 1 bis 4, wobei die Breite der Längsrichtungsrippen (7b), die nahe dem Mittelpunkt in der Breitenrichtung des Grubendeckels ausgebildet sind, so ausgebildet sind, dass sie breiter als die Breite der Längsrichtungsrippen sind, die auf beiden Endabschnittsseiten in der Breitenrichtung ausgebildet sind.

6. Grubendeckel nach einem der Ansprüche 1 bis 5, wobei der Grubendeckel sowohl in der Breitenrichtung als auch in der Längsrichtung so ausgebildet ist, dass die Oberflächenform des Grubendeckels eine zum Mittelpunkt der oberen Platte (3) als einem Scheitelpunkt hin ansteigende konvexe Form ist, und wiederholt linienförmige Vorsprünge mit einer Rippenform mehrfach ausgebildet sind und in einander schneidende Richtungen weisen, wozwischen Punktvorsprünge angeordnet sind, um für Rauigkeit zu sorgen, um Rutschen auf der Oberfläche der oberen Platte zu vermeiden, wobei die Höhe der Punktvorsprünge größer als die der linienartigen Vorsprünge ist.

7. Grubendeckel nach einem der Ansprüche 1 bis 6, wobei eine Beschichtung als Wärmeschild oder zur Rutschvermeidung auf die Oberfläche der oberen Platte (3) angewendet ist.

8. Grubendeckel nach Anspruch 3 oder 4, wobei die Strömungspassagen-Aufrechterhaltungseinrichtung eine an den Endabschnitten der Breitenrichtungsrippen (7a) ausgebildete verjüngte Form aufweist und die Endabschnitte der Breitenrichtungsrippen eine verjüngte Form aufweisen, die von der oberen Platte (3) nach unten divergiert.

9. Grubendeckel, umfassend:
eine obere Platte (3);
Breitenrichtungsrippen (7a) und Längsrichtungsrippen (7b), die einstückig in einem wechselweise orthogonalen Gitter horizontaler und vertikaler gerader Linien auf einer rückwärtigen Oberfläche der oberen Platte bis nahe dem Außenumfang der oberen Platte ausgebildet sind, und so jeweils orthogonal zu einer Längsrichtung und zu einer Breitenrichtung der oberen Platte zu sein; und
ein paar von Handgriffen (5),
wobei:
sich ein Raum (11a), der durch eine Rippenstruktur beider Endabschnitte (7aE) der Breitenrichtungsrippen und der Längsrichtungsrippen, die auf der äußersten Seite in der Breitenrichtung des Grubendeckels angeordnet sind, partitioniert ist, zu den Endabschnitten in der Breitenrichtung des Grubendeckels hin öffnet, um mehrere erste Luftströmungspassagen zu bilden, die für Kommunikation zwischen dem Raum und der Außenumgebung des Grubendeckels an beiden Endabschnitten in der Breitenrichtung des Grubendeckels sorgen, und
Längsrichtungsrippen, die zusammen mit den anderen Abschnitten als den beiden Endabschnitten der Breitenrichtungsrippen in einem Gitter kreuzen, die Wandabschnitte einer zweiten Rippenstruktur bilden, die in Räume partitioniert ist, die mehrfach in horizontaler und vertikaler Fortsetzung der rückwärtigen Oberfläche der oberen Platte ausgebildet sind, wobei jeder der Räume in fünf Richtungen von entsprechenden Wandabschnitten und der rückwärtigen Oberfläche der oberen Platte umgeben ist,
**gekennzeichnet dadurch, dass** die Handgriffe als ausgeschnittene Abschnitte an beiden Endabschnitten in der Längsrichtung des Grubendeckels an einem mittleren Abschnitt in der Breitenrichtung ausgebildet sind, um so eine zweite Luftströmungspassage zu bilden, die für direkte Kommunikation zwischen der Rückseite der oberen Platte und der Außenumgebung des Grubendeckels sorgt, um so durch Handgriffsrippen (7c) im Randbereich der ausgeschnittenen Abschnitte einstückig mit Längsrichtungsrippen verbunden zu sein, und
wobei die ersten Luftströmungspassagen an den jeweiligen Breitenrichtungsendabschnitten des Grubendeckels als Luftströmungspassagen ausgebildet sind, die die gesamte Länge in der Längsrichtung zwischen den Längsrichtungsendabschnitten des Grubendeckels durchgängig kreuzen.

10. Herstellungsverfahren für den in Anspruch 1 oder 9 beschriebenen Grubendeckel, umfassend:
Aufteilen einer Gussform, die den Grubendeckel herstellt, in ein Paar erster Gussformen, die eine Stelle einrichten, die die erste Strömungspassage bildet, und eine zweite Gussform, die einen nahezu mittleren Abschnitt des Grubendeckels einrichtet, wobei die zweite Gussform zwischen dem Paar erster Gussformen entlang der Breitenrichtung positioniert wird; und
Ersetzen lediglich der ersten Gussform, die verschiedene Breiten aufweist, entsprechend der Breite des Grubendeckels und Verwenden der zweiten Gussform bei der Herstellung des Grubendeckels für alle Breiten.

## Revendications

1. Couvercle de fosse, comprenant :
une plaque supérieure (3) ;
des nervures dans le sens de la largeur (7a) et des nervures dans le sens de la longueur (7b) formées de façon intégrale en un réseau mutuellement orthogonal de lignes droites horizontales et verticales sur une surface verso de la plaque supérieure jusqu'à proximité de la périphérie extérieure de la plaque supérieure, de manière à être orthogonales à un sens de la longueur et un sens de la largeur de la plaque supérieure, respectivement ; et
une paire de poignées (5),
dans lequel :
un espace (11a) partitionné par une première structure de nervures des deux parties d'extrémité (7aE) des nervures dans le sens de la largeur et des nervures dans le sens de la longueur disposées sur le côté le plus extérieur dans le sens de la largeur du couvercle de fosse s'ouvre vers les parties d'extrémité dans le sens de la largeur du couvercle de fosse pour former une pluralité de premiers chemins d'écoulement d'air communiquant entre l'espace et l'extérieur du couvercle de fosse dans les deux parties d'extrémité dans le sens de la largeur du couvercle de fosse, et
les nervures dans le sens de la longueur qui se croisent en un réseau avec les parties autres que les deux parties d'extrémité des nervures dans le sens de la largeur forment les parties de paroi d'une deuxième structure de nervures qui est partitionnée en des espaces formés en pluralité en une continuité horizontale et verticale avec la surface verso de la plaque supérieure, chacun des espaces étant entouré dans cinq directions par des parties de parois respectives et la surface verso de la plaque supérieure,
**caractérisé en ce que** les poignées sont formées comme des parties découpées sur les deux parties d'extrémité dans le sens de la largeur du couvercle de fosse au niveau d'une partie centrale dans le sens de la longueur, de manière à former un deuxième chemin d'écoulement d'air communiquant directement entre le côté de dos de la plaque supérieure et l'extérieur du couvercle de fosse, de manière à être jointes avec des nervures dans le sens de la largeur intégralement par des nervures (7c) de poignée dans la périphérie des parties découpées,
les premiers chemins d'écoulement d'air et le deuxième chemin d'écoulement d'air sont formés de telle manière qu'à la fois les premiers chemins d'écoulement d'air et le deuxième chemin d'écoulement d'air font face dans la même direction dans le sens de la largeur du couvercle de fosse et les premiers chemins d'écoulement d'air respectifs prennent en sandwich le deuxième chemin d'écoulement d'air symétriquement au deuxième chemin d'écoulement d'air, et
les premiers chemins d'écoulement d'air et le deuxième chemin d'écoulement d'air sont formés sur les parties d'extrémité dans le sens de la largeur du couvercle de fosse comme des chemins d'écoulement d'air qui croisent de façon continue la totalité de la longueur dans le sens de la longueur entre des parties d'extrémité dans le sens de la longueur du couvercle de fosse.

2. Couvercle de fosse selon la revendication 1, dans lequel, dans le premier chemin d'écoulement d'air, une superficie en coupe transversale formée par la plaque supérieure (3) et les nervures dans le sens de la largeur (8a) est une coupe transversale de quand l'espace (11a) est coupé dans le sens de la longueur, et la superficie en coupe transversale augmente vers les deux côtés d'extrémité dans le sens de la largeur du couvercle de fosse.

3. Couvercle de fosse selon la revendication 1 ou 2, dans lequel un moyen de maintien d'écoulement d'air en surplomb sur les deux côtés depuis les parties de bord dans le sens de la largeur de la plaque supérieure (3) est formé sur au moins une partie d'une surface d'extrémité dans le sens de la largeur du couvercle de fosse, et lorsqu'une partie d'extrémité du moyen de maintien d'écoulement d'air est mise en contact avec une partie de paroi presque verticale, un espace est maintenu entre une partie de bord dans le sens de la largeur de la plaque supérieure et la partie de paroi qui peut empêcher que le premier chemin d'écoulement d'air soit obstrué.

4. Couvercle de fosse selon la revendication 3, dans lequel le moyen de maintien d'écoulement d'air est formé sur la partie d'extrémité des nervures dans le sens de la largeur (7a), et est formé de telle manière que la partie d'extrémité des nervures dans le sens de la largeur fait saillie dans le sens de la largeur de la fosse depuis la partie d'extrémité dans le sens de la largeur de la plaque supérieure.

5. Couvercle de fosse selon l'une quelconque des revendications 1 à 4, dans lequel la largeur des nervures dans le sens de la longueur (7b) formées à côté du centre dans le sens de la largeur du couvercle de fosse sont formée de manière à être plus larges que la largeur des nervures dans le sens de la longueur formées sur les deux côtés de partie d'extrémité dans le sens de la largeur.

6. Couvercle de fosse selon l'une quelconque des revendications 1 à 5, dans lequel le couvercle de fosse est formé à la fois dans le sens de la largeur et le sens de la longueur de telle manière que la forme de surface du couvercle de fosse est une forme convexe surélevée vers le haut avec le centre de la plaque supérieure (3) comme un sommet, et des saillies linéaires ayant une forme de nervure sont formées de façon répétée en pluralité faisant face à des sens se croisant où des saillies ponctuelles sont interposées pour fournir une rugosité pour agir comme une prévention de glissement sur la surface de la plaque supérieure, avec la hauteur des saillies ponctuelles supérieure à celle des saillies linéaires.

7. Couvercle de fosse selon l'une quelconque des revendications 1 à 6, dans lequel un revêtement est appliqué à la surface de la plaque supérieure (3) pour une protection contre la chaleur ou une prévention de glissement.

8. Couvercle de fosse selon la revendication 3 ou 4, dans lequel le moyen de maintien d'écoulement d'air a une forme conique formée sur les parties d'extrémité des nervures dans le sens de la largeur (7a), et les parties d'extrémité des nervures dans le sens de la largeur ont une forme conique qui diverge vers le bas depuis la plaque supérieure (3).

9. Couvercle de fosse, comprenant :
une plaque supérieure (3) ;
des nervures dans le sens de la largeur (7a) et des nervures dans le sens de la longueur (7b) formées de façon intégrale en un réseau mutuellement orthogonal de lignes droites horizontales et verticales sur une surface verso de la plaque supérieure jusqu'à proximité de la périphérie extérieure de la plaque supérieure, de manière à être orthogonales à un sens de la longueur et un sens de la largeur de la plaque supérieure, respectivement ; et
une paire de poignées (5),
dans lequel :
un espace (11a) partitionné par une première structure de nervures des deux parties d'extrémité (7aE) des nervures dans le sens de la largeur et des nervures dans le sens de la longueur disposées sur le côté le plus extérieur dans le sens de la largeur du couvercle de fosse s'ouvre vers les parties d'extrémité dans le sens de la largeur du couvercle de fosse pour former une pluralité de premiers chemins d'écoulement d'air communiquant entre l'espace et l'extérieur du couvercle de fosse dans les deux parties d'extrémité dans le sens de la largeur du couvercle de fosse, et
les nervures dans le sens de la longueur qui se croisent en un réseau avec les parties autres que les deux parties d'extrémité des nervures dans le sens de la largeur forment les parties de paroi d'une deuxième structure de nervures qui est partitionnée en des espaces formés en pluralité en une continuité horizontale et verticale avec la surface verso de la plaque supérieure, chacun des espaces étant entouré dans cinq directions par des parties de parois respectives et la surface verso de la plaque supérieure,
**caractérisé en ce que** les poignées sont formées comme des parties découpées sur les deux parties d'extrémité dans le sens de la longueur du couvercle de fosse au niveau d'une partie centrale dans le sens de la largeur, de manière à former un deuxième chemin d'écoulement d'air qui communique directement entre le côté de dos de la plaque supérieure et l'extérieur du couvercle de fosse, de manière à être jointes avec des nervures dans le sens de la longueur intégralement par des nervures (7c) de poignée dans la périphérie des parties découpées, et
les premiers chemins d'écoulement d'air sont formés sur les parties d'extrémité dans le sens de la largeur respectives du couvercle de fosse comme des chemins d'écoulement d'air qui croisent de façon continue la totalité de la longueur dans le sens de la longueur entre des parties d'extrémité dans le sens de la longueur du couvercle de fosse.

10. Procédé de fabrication du couvercle de fosse selon la revendication 1 ou 9, comprenant :
la division d'un moule qui fabrique le couvercle de fosse en une paire de premiers moules qui configurent un emplacement qui constitue le premier chemin d'écoulement et un deuxième moule qui configure une section presque centrale du couvercle de fosse, le deuxième moule étant positionné entre la paire de premiers moules dans le sens de la largeur ; et
le remplacement uniquement du premier moule ayant différentes largeurs en fonction de la largeur du couvercle de fosse et l'utilisation du deuxième moule dans la fabrication du couvercle de fosse pour toutes les largeurs.
